(19) 

Europäisches
Patentamt
European
Patent Office
Office européen
des brevets

(11) **EP 4 568 341 A1**

(12) **EUROPEAN PATENT APPLICATION**
published in accordance with Art. 153(4) EPC

(43) Date of publication:
**11.06.2025 Bulletin 2025/24**

(21) Application number: **23862019.9**

(22) Date of filing: **30.06.2023**

(51) International Patent Classification (IPC):
***H04W 28/20*** (2009.01)

(52) Cooperative Patent Classification (CPC):
**H04W 28/20**

(86) International application number:
**PCT/CN2023/104742**

(87) International publication number:
**WO 2024/051318 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.09.2022 CN 202211080747**

(71) Applicant: **Huawei Technologies Co., Ltd.
Shenzhen, Guangdong 518129 (CN)**

(72) Inventors:
• **LIU, Peng
Shenzhen, Guangdong 518129 (CN)**
• **GUO, Ziyang
Shenzhen, Guangdong 518129 (CN)**
• **QIAN, Bin
Shenzhen, Guangdong 518129 (CN)**

(74) Representative: **Huawei European IPR
Huawei Technologies Duesseldorf GmbH
Riesstraße 25
80992 München (DE)**

(54) **COMMUNICATION METHOD AND APPARATUS**

(57) This application is applied to a UWB-based wireless personal area network system, including 802.15 series protocols, for example, the 802.15.4a protocol, the 802.15.4z protocol, or the 802.15.4ab protocol; a wireless local area network system that can support 802.11 series protocols such as a next-generation Wi-Fi protocol of IEEE 802.11ax, like 802.11be, Wi-Fi 7, or EHT, and a next-generation protocol of 802.11be, like Wi-Fi 8; a sensing system, or the like. Embodiments of this application provide a communication method and an apparatus. According to this application, a transmit end may send a first frame, and then a receive end may determine, based on the first frame, an available narrowband channel that can be used to transmit an NB signal. If a spectrum of a narrowband system overlaps a spectrum of a Wi-Fi system, according to the method provided in this application, the NB signal sent by the receive end can be prevented from being interfered by a Wi-Fi device.

FIG. 5

EP 4 568 341 A1

## Description

This application claims priority to Chinese Patent Application No. 202211080747.3, filed with the China National Intellectual Property Administration on September 5, 2022 and entitled "COMMUNICATION METHOD AND APPARATUS", which is incorporated herein by reference in its entirety.

## TECHNICAL FIELD

Embodiments of this application relate to the communication field, and more specifically, to a communication method and an apparatus.

## BACKGROUND

An ultra-wideband (ultra-wideband, UWB) technology is a wireless communication (ranging, sensing, or the like) technology that uses a nanosecond-level non-sinusoidal narrow impulse signal. Due to its narrow impulse and extremely low radiation spectral density, a UWB system has advantages of a strong multipath resolution capability, low power consumption, high confidentiality, and the like.

In a ranging or sensing scenario, precision of a measurement or sensing result is greatly related to a signal bandwidth, and a larger signal bandwidth indicates higher precision of a result obtained through sensing or ranging. Therefore, it may be considered that a reference signal for ranging or sensing is received and sent by using the UWB system, and another reference signal and/or data are/is transmitted according to a narrowband protocol. Such a processing manner may be understood as narrowband (narrowband, NB)-assisted UWB ranging or sensing.

Currently, a candidate spectrum of a narrowband system includes an unlicensed national information infrastructure 3 (unlicensed national information infrastructure, U-NII 3) and a U-NII 5, and the spectrum overlaps a spectrum corresponding to a Wi-Fi channel. In this case, an NB signal exchanged between an initiator and a responder may be interfered by a Wi-Fi device.

## SUMMARY

Embodiments of this application provide a communication method and an apparatus, to resolve a problem of how a narrowband system and a wireless fidelity (wireless fidelity, Wi-Fi) system share a spectrum.

According to a first aspect, a communication method is provided. The method may be performed by a communication device, or may be performed by a component (for example, a chip or a circuit) of a communication device. This is not limited. For ease of description, an example in which the method is performed by a transmit end device is used below for description.

The method may include: generating a first frame, where the first frame is used to determine at least one available narrowband channel that can be used to transmit a narrowband (narrowband, NB) signal, and the first frame includes at least one of the following fields: a first field, a second field, or at least one scaling factor field; and sending the first frame, where the first field indicates whether a frequency domain resource of each of at least one Wi-Fi channel can be used to transmit the NB signal; the second field indicates whether a frequency domain resource of each of at least one narrowband channel can be used to transmit the NB signal, and each of the at least one narrowband channel includes a frequency domain resource that cannot be used to transmit a Wi-Fi signal; and the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

The at least one available narrowband channel belongs to a plurality of candidate narrowband channels, and the plurality of candidate narrowband channels are obtained by performing channel division on a spectrum of a narrowband system.

The at least one narrowband channel belongs to a plurality of reference narrowband channels, and the plurality of reference narrowband channels are obtained by performing channel division on the spectrum of the narrowband system in a predefined channel division manner. The predefined channel division manner is the same as a target channel division manner, or the predefined channel division manner is different from a target channel division manner. This is not limited in this embodiment of this application. The target channel division manner is used for channel division on the spectrum of the narrowband system to obtain the plurality of candidate narrowband channels. It may be understood that if the predefined channel division manner is the same as the target channel division manner, the plurality of reference narrowband channels are the same as the plurality of candidate narrowband channels. In other words, the at least one narrowband channel belongs to the plurality of candidate narrowband channels.

Based on the foregoing technical solution, the transmit end device may send the first frame to a receive end device, and then the receive end device may determine, based on the first frame, the at least one available narrowband channel that can be used to transmit the NB signal. When the spectrum of the narrowband system overlaps a spectrum of a Wi-Fi system, according to the method provided in this embodiment of this application, the transmit end device can indicate, to the receive end device by using the first frame, a frequency domain resource that is not occupied by a Wi-Fi device, that is, the frequency domain resource of the at least one available narrowband channel determined by the receive end device based on the first frame is not occupied by the Wi-Fi device. In this way, the NB signal sent by the receive end device can be prevented from being interfered by the Wi-Fi device.

In addition, in this embodiment of this application, the first field indicates whether the frequency domain resource of the at least one Wi-Fi channel can be used to transmit the NB signal. A bandwidth of the Wi-Fi channel is large, and for a segment of spectrum resources, a quantity of bits required for indicating the Wi-Fi channel is less than a quantity of bits required for indicating the narrowband channel. Therefore, the method provided in this embodiment of this application does not cause high bit overheads.

In this embodiment of this application, the second field further indicates whether the frequency domain resource of the at least one narrowband channel can be used to transmit the NB signal, and each of the at least one narrowband channel includes the frequency domain resource that cannot be used to transmit the Wi-Fi signal. In this way, when a spectrum resource of the narrowband system includes the frequency domain resource that cannot be used to transmit the Wi-Fi signal, the spectrum resource of the narrowband system can be comprehensively indicated.

In addition, the first frame may further include the at least one scaling factor field. Then, whether the frequency domain resource of the Wi-Fi channel can be used to transmit the NB signal can be flexibly indicated by using the scaling factor field. If a device has both a capability of transmitting an NB signal and a capability of transmitting a Wi-Fi signal, a scaling factor whose value is greater than 1 may be indicated by using the at least one scaling factor field. In this way, a frequency domain resource for transmitting the NB signal is not adjacent to a frequency domain resource for transmitting the Wi-Fi signal, thereby preventing in-band interference.

For example, if the plurality of reference narrowband channels and the at least one Wi-Fi channel satisfy the following relationship: $f_{8n'} = f_{149+4(n'-1)}^{\text{Wi-Fi}} - 1.25$, a value of the scaling factor is M/4, M is a positive integer, $1 \le M < 8$, $1 \le n' \le 6$, $f_{8n'}$ represents a frequency of an $8n'^{th}$ narrowband channel in the plurality of reference narrowband channels, and $f_{149+4(n'-1)}^{\text{Wi-Fi}}$ represents a frequency of a Wi-Fi channel whose channel number is [149+4(n'-1)].

For another example, if the plurality of reference narrowband channels and the at least one Wi-Fi channel satisfy the following relationship: $f_{8n'} = f_{149+4(n'-1)}^{\text{Wi-Fi}}$, a value of the scaling factor is N/8, N is a positive odd number, and $1 \le N < 8$.

With reference to the first aspect, in some implementations of the first aspect, the first frame includes the first field, and the first field includes at least one bit corresponding to the at least one Wi-Fi channel; and if a value of a first bit in the at least one bit corresponding to the at least one Wi-Fi channel is a first value, a frequency domain resource of a Wi-Fi channel corresponding to the first bit can be used to transmit the NB signal; or if a value of a first bit in the at least one bit corresponding to the at least one Wi-Fi channel is a second value, a frequency domain resource of a Wi-Fi channel corresponding to the first bit cannot be used to transmit the NB signal.

A correspondence between the at least one Wi-Fi channel and the at least one bit is not limited in this application. For example, the correspondence between the at least one Wi-Fi channel and the at least one bit is a one-to-one relationship, or the correspondence between the at least one Wi-Fi channel and the at least one bit is a many-to-one relationship. It may be understood that, if the correspondence between the at least one Wi-Fi channel and the at least one bit is the many-to-one relationship, a quantity of bits of the first field is smaller, and therefore a quantity of bits of the first frame is smaller. In this way, excessively high bit overheads can be prevented.

With reference to the first aspect, in some implementations of the first aspect, the first frame includes the first field, and if the first field includes a bit corresponding to a first Wi-Fi channel in the at least one Wi-Fi channel, and the first field includes a bit corresponding to a second Wi-Fi channel in the at least one Wi-Fi channel, a first frequency domain resource corresponding to the first Wi-Fi channel, a second frequency domain resource corresponding to the second Wi-Fi channel, and a frequency domain resource between the first frequency domain resource and the second frequency domain resource cannot be used to transmit the NB signal; or a first frequency domain resource corresponding to the first Wi-Fi channel, a second frequency domain resource corresponding to the second Wi-Fi channel, and a frequency domain resource between the first frequency domain resource and the second frequency domain resource can be used to transmit the NB signal.

Based on the foregoing technical solution, whether a segment of frequency domain resources with a larger bandwidth can be used to transmit the NB signal can be indicated by using a smaller quantity of bits.

With reference to the first aspect, in some implementations of the first aspect, the first frame includes the second field, and the second field includes at least one bit corresponding to the at least one narrowband channel; and if a value of a second bit in the at least one bit corresponding to the at least one narrowband channel is a first value, a frequency domain field of a narrowband channel corresponding to the second bit can be used to transmit the NB signal; or if a value of a second bit in the at least one bit corresponding to the at least one narrowband channel is a second value, a frequency domain resource of a narrowband channel corresponding to the second bit cannot be used to transmit the NB signal.

A correspondence between the at least one narrowband channel and the at least one bit is not limited in this application. For example, the correspondence between the at least one narrowband channel and the at least one bit is a one-to-one relationship, or the correspondence between the at least one narrowband channel and the at least one bit is a many-to-one relationship. It may be understood that, if the correspondence between the at least one narrowband channel and the at least one bit is the many-to-one relationship, a quantity of bits of the second field is smaller, and therefore the quantity of bits of the first frame is smaller. In this way, excessively high bit overheads can be prevented.

With reference to the first aspect, in some implementations of the first aspect, the first frame includes a third field, the third field indicates an offset value between a frequency of the available narrowband channel and a frequency of a reference narrowband channel, and the frequency of the reference narrowband channel is a preset value.

Based on the foregoing technical solution, if a reference narrowband channel division manner is different from a candidate narrowband channel division manner, the first frame may include the third field. In this way, the receive end device can determine the frequency of the available narrowband channel based on the third field and the frequency of the reference channel.

With reference to the first aspect, in some implementations of the first aspect, the first frame further includes a fourth field, and the fourth field is used to determine a bandwidth of the available narrowband channel.

For example, the fourth field indicates the bandwidth of the available narrowband channel, or the fourth field indicates a multiple relationship between the bandwidth of the available narrowband channel and a bandwidth of the reference narrowband channel, and the bandwidth of the reference narrowband signal is a fixed value.

Based on the foregoing technical solution, if the reference narrowband channel division manner is different from the candidate narrowband channel division manner, the first frame may include the fourth field. In this way, the receive end device can determine the bandwidth of the available narrowband channel based on the fourth field.

With reference to the first aspect, in some implementations of the first aspect, the first frame includes the first field, the first frame further includes a fifth field, and the fifth field indicates a bandwidth of the Wi-Fi channel.

Because the bandwidth of the Wi-Fi channel may not be fixed, the bandwidth of the Wi-Fi channel can be indicated by using the fifth field.

With reference to the first aspect, in some implementations of the first aspect, the first frame further includes a sixth field, and the sixth field is used to determine duration of a time period in which the available narrowband channel can be used to transmit the NB signal and/or a start moment of the time period.

For example, the sixth field includes a fourth subfield and/or a fifth subfield, the fourth subfield indicates an interval between the start moment of the time period and a moment at which the first frame is sent, and the fifth subfield indicates duration between the moments.

A unit of the duration indicated by the fourth subfield is a measurement slot or measurement duration, and the measurement duration is duration required for performing data measurement once. That is, the fourth subfield indicates that the interval between the start moment of the time period and the moment at which the first frame is sent is L measurement slots or L pieces of measurement duration. It may be understood that the interval between the start moment of the time period in which the available narrowband channel can be used to transmit the NB signal and the moment at which the first frame is sent usually does not exceed 1s, and duration of one measurement slot is not less than 1 ms. Therefore, if the unit of the duration indicated by the fourth subfield is the measurement slot, the duration indicated by the fourth subfield includes a maximum of 1000 measurement slots. When there are a maximum of 1000 measurement slots, the fourth subfield includes a maximum of 10 bits. Similarly, if one piece of measurement duration includes 10 measurement slots, the duration indicated by the fourth subfield includes a maximum of 100 pieces of measurement duration, that is, the fourth subfield includes a maximum of seven bits.

A unit of the duration indicated by the fifth subfield is a measurement slot or measurement duration.

With reference to the first aspect, in some implementations of the first aspect, the first frame further includes a seventh field, and the seventh field indicates whether the first frame includes at least one of the following fields: the first field, the second field, the at least one scaling factor field, the third field, the fourth field, the fifth field, or the sixth field.

Based on the foregoing technical solution, the receive end device can determine the structure of the first frame based on the seventh field. This helps the receive end device correctly parse the first frame.

With reference to the first aspect, in some implementations of the first aspect, before the sending the first frame, the method further includes: receiving a second frame, where the second frame is used to determine a first narrowband channel for transmitting the NB signal.

According to a second aspect, a communication method is provided. The method may be performed by a communication device, or may be performed by a component (for example, a chip or a circuit) of a communication device. This is not limited. For ease of description, an example in which the method is performed by a receive end device is used below for description.

The method includes: receiving a first frame, where the first frame includes at least one of the following fields: a first field, a second field, or at least one scaling factor field; and determining, based on the first frame, at least one available narrowband channel that can be used to transmit an NB signal, where the first field indicates whether a frequency domain resource of each of at least one Wi-Fi channel can be used to transmit the NB signal; the second field indicates whether a frequency domain resource of each of at least one narrowband channel can be used to transmit the NB signal, and each of the at least one narrowband channel includes a frequency domain resource that cannot be used to transmit a Wi-Fi signal; and the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

For more description and beneficial effect of any one of the second aspect and the possible implementations of the second aspect, refer to the first aspect.

With reference to the second aspect, in some implementations of the second aspect, the first frame includes the first field, the first field includes at least one bit corresponding to the at least one Wi-Fi channel, and the determining, based on the first frame, at least one available narrowband channel that can be used to transmit an NB signal includes: if a value of a first bit in the at least one bit corresponding to the at least one Wi-Fi channel is a first value, determining that a frequency domain resource of a Wi-Fi channel corresponding to the first bit can be used to transmit the NB signal, where a frequency domain resource of the at least one available narrowband channel includes the frequency domain resource of the Wi-Fi channel corresponding to the first bit; or if a value of a first bit in the at least one bit corresponding to the at least one Wi-Fi channel is a second value, determining that a frequency domain resource of a Wi-Fi channel corresponding to the first bit cannot be used to transmit the NB signal.

With reference to the second aspect, in some implementations of the second aspect, the first frame includes the first field, and if the first field includes a bit corresponding to a first Wi-Fi channel in the at least one Wi-Fi channel, and the first field includes a bit corresponding to a second Wi-Fi channel in the at least one Wi-Fi channel, determining that a first frequency domain resource corresponding to the first Wi-Fi channel, a second frequency domain resource corresponding to the second Wi-Fi channel, and a frequency domain resource between the first frequency domain resource and the second frequency domain resource cannot be used to transmit the NB signal; or determining that a first frequency domain resource corresponding to the first Wi-Fi channel, a second frequency domain resource corresponding to the second Wi-Fi channel, and a frequency domain resource between the first frequency domain resource and the second frequency domain resource can be used to transmit the NB signal.

With reference to the second aspect, in some implementations of the second aspect, the first frame includes the second field, the second field includes at least one bit corresponding to the at least one narrowband channel, and the determining, based on the first frame, at least one available narrowband channel that can be used to transmit an NB signal includes: if a value of a second bit in the at least one bit corresponding to the at least one narrowband channel is a first value, determining that a frequency domain resource of a narrowband channel corresponding to the second bit can be used to transmit the NB signal, where the frequency domain resource of the at least one available narrowband channel includes the frequency domain resource of the narrowband channel corresponding to the second bit; or if a value of a second bit in the at least one bit corresponding to the at least one narrowband channel is a second value, a narrowband channel corresponding to the second bit cannot be used to transmit the NB signal.

With reference to the second aspect, in some implementations of the second aspect, the first frame includes a third field, the third field indicates an offset value between a frequency of the available narrowband channel and a frequency of a reference narrowband channel, and the frequency of the reference narrowband channel is a preset value; and the determining, based on the first frame, at least one available narrowband channel that can be used to transmit an NB signal includes: determining, based on the at least one of the following fields included in the first frame: the first field, the second field, or the at least one scaling factor field, an available frequency domain resource that can be used to transmit the NB signal; and determining the at least one available narrowband channel based on the available frequency domain resource and the third field.

With reference to the second aspect, in some implementations of the second aspect, the first frame further includes a fourth field, and the fourth field is used to determine a bandwidth of the available narrowband channel; and the determining, based on the first frame, at least one available narrowband channel that can be used to transmit an NB signal includes: determining, based on the at least one of the following fields included in the first frame: the first field, the second field, or the at least one scaling factor field, an available frequency domain resource that can be used to transmit the NB signal; and determining the at least one available narrowband channel based on the available frequency domain resource and the fourth field.

With reference to the second aspect, in some implementations of the second aspect, the first frame includes the first field, the first frame further includes a fifth field, and the fifth field indicates a bandwidth of the Wi-Fi channel.

With reference to the second aspect, in some implementations of the second aspect, the first frame further includes a sixth field, and the sixth field is used to determine duration of a time period in which the available narrowband channel can be used to transmit the NB signal and/or a start moment of the time period; and the method further includes: determining, based on the first frame, the duration of the time period in which the available narrowband channel can be used to transmit the NB signal and/or the start moment of the time period.

With reference to the second aspect, in some implementations of the second aspect, the first frame further includes a seventh field, and the seventh field indicates whether the first frame includes at least one of the following fields: the first field, the second field, the at least one scaling factor field, the third field, the fourth field, the fifth field, or the sixth field.

With reference to the second aspect, in some implementations of the second aspect, the method further includes: sending a second frame, where the second frame is used to determine a first narrowband channel for transmitting the NB signal.

According to a third aspect, a communication method is provided. The method may be performed by a communication device, or may be performed by a component (for example, a chip or a circuit) of a communication device. This is not limited. For ease of description, an example in which the method is performed by a receive end device is used below for description.

The method includes: sending a second frame in a measurement control phase of an $n^{th}$ measurement process, where the second frame is used to determine at least one recommended narrowband channel for transmitting an NB signal, and n is a positive integer; receiving an acknowledgment frame of the second frame in a measurement result report phase of the $n^{th}$ measurement process; and sending the NB signal through the recommended narrowband channel in an $(n+1)^{th}$ measurement process.

Based on the foregoing technical solution, the receive end device may indicate, to a transmit end device by using the second frame, a first narrowband channel that can be used to transmit the NB signal. Further, if the transmit end device determines that the first narrowband channel can be used to transmit the NB signal, the transmit end device may reply with the acknowledgment frame to the receive end device, so that the receive end device determines, based on the acknowledgment frame, that the first narrowband channel can be used to transmit the NB signal. Further, the NB signal can be transmitted between the transmit end device and the receive end device through the first narrowband channel in a next measurement process.

According to a fourth aspect, a communication method is provided. The method may be performed by a communication device, or may be performed by a component (for example, a chip or a circuit) of a communication device. This is not limited. For ease of description, an example in which the method is performed by a transmit end device is used below for description.

The method includes: generating a first frame, where the first frame is used to determine at least one available narrowband channel that can be used to transmit an NB signal, the first frame includes a first field, the first field indicates whether a frequency domain resource corresponding to each of at least one first channel can be used to transmit the NB signal, and a bandwidth of the first channel is greater than a bandwidth of the available narrowband channel; and sending the first frame.

Based on the foregoing technical solution, whether the frequency domain resource of the first channel can be used to transmit the NB signal is indicated, so that the at least one available narrowband channel can be indicated to a receive end device. In addition, the bandwidth of the first channel is greater than the bandwidth of the available narrowband channel, and for a segment of spectrum resources, a quantity of bits required for indicating the first channel is less than a quantity of bits required for indicating the narrowband channel. Therefore, the method provided in this embodiment of this application does not cause high bit overheads.

With reference to the fourth aspect, in some implementations of the fourth aspect, the first frame includes the first field, and the first field includes at least one bit corresponding to the at least one first channel; and if a value of a first bit in the at least one bit corresponding to the at least one first channel is a first value, a frequency domain resource of a first channel corresponding to the first bit can be used to transmit the NB signal; or if a value of a first bit in the at least one bit corresponding to the at least one first channel is a second value, a frequency domain resource of a first channel corresponding to the first bit cannot be used to transmit the NB signal.

With reference to the fourth aspect, in some implementations of the fourth aspect, the first frame includes a third field, the third field indicates an offset value between a frequency of the available narrowband channel and a frequency of a reference narrowband channel, and the frequency of the reference narrowband channel is a preset value.

Based on the foregoing technical solution, if a reference narrowband channel division manner is different from a candidate narrowband channel division manner, the first frame may include the third field. In this way, the receive end device can determine the frequency of the available narrowband channel based on the third field and the frequency of the reference channel.

With reference to the fourth aspect, in some implementations of the fourth aspect, the first frame further includes a fourth field, and the fourth field is used to determine the bandwidth of the available narrowband channel.

For example, the fourth field indicates the bandwidth of the available narrowband channel, or the fourth field indicates a multiple relationship between the bandwidth of the available narrowband channel and a bandwidth of the reference narrowband channel, and the bandwidth of the reference narrowband signal is a fixed value.

Based on the foregoing technical solution, if the reference narrowband channel division manner is different from the candidate narrowband channel division manner, the first frame may include the fourth field. In this way, the receive end device can determine the bandwidth of the available narrowband channel based on the fourth field.

With reference to the fourth aspect, in some implementations of the fourth aspect, the first frame further includes a fifth field, and the fifth field indicates the bandwidth of the first channel.

Because the bandwidth of the first channel may not be fixed, a bandwidth of the Wi-Fi channel can be indicated by using the fifth field.

With reference to the fourth aspect, in some implementations of the fourth aspect, the first frame further includes a sixth field, and the sixth field is used to determine duration of a time period in which the available narrowband channel can be used to transmit the NB signal and/or a start moment of the time period.

For example, the sixth field includes a fourth subfield and/or a fifth subfield, the fourth subfield indicates an interval between the start moment of the time period and a moment at which the first frame is sent, and the fifth subfield indicates duration between the moments.

A unit of the duration indicated by the fourth subfield is a measurement slot or measurement duration, and the measurement duration is duration required for performing data measurement once. That is, the fourth subfield indicates that the interval between the start moment of the time period and the moment at which the first frame is sent is L measurement slots or L pieces of measurement duration. It may be understood that the interval between the start moment of the time period in which the available narrowband channel can be used to transmit the NB signal and the moment at which the first frame is sent usually does not exceed 1s, and duration of one measurement slot is not less than 1 ms. Therefore, if the unit of the duration indicated by the fourth subfield is the measurement slot, the duration indicated by the fourth subfield includes a maximum of 1000 measurement slots. When there are a maximum of 1000 measurement slots, the fourth subfield includes a maximum of 10 bits. Similarly, if one piece of measurement duration includes 10 measurement slots, the duration indicated by the fourth subfield includes a maximum of 100 pieces of measurement duration, that is, the fourth subfield includes a maximum of seven bits.

A unit of the duration indicated by the fifth subfield is a measurement slot or measurement duration.

With reference to the fourth aspect, in some implementations of the fourth aspect, the first frame further includes a seventh field, and the seventh field indicates whether the first frame includes at least one of the following fields: the first field, at least one scaling factor field, the third field, the fourth field, the fifth field, or the sixth field.

Based on the foregoing technical solution, the receive end device can determine the structure of the first frame based on the seventh field. This helps the receive end device correctly parse the first frame.

According to a fifth aspect, a communication method is provided. The method may be performed by a communication device, or may be performed by a component (for example, a chip or a circuit) of a communication device. This is not limited. For ease of description, an example in which the method is performed by a receive end device is used below for description.

The method includes: receiving a first frame, where the first frame includes a first field, the first field indicates whether a frequency domain resource corresponding to each of at least one first channel can be used to transmit an NB signal, and a bandwidth of the first channel is greater than a bandwidth of an available narrowband channel; and determining, based on the first frame, at least one available narrowband channel that can be used to transmit the NB signal.

For beneficial effect of any one of the fifth aspect and the possible implementations of the fifth aspect, refer to the fourth aspect.

With reference to the fifth aspect, in some implementations of the fifth aspect, the first frame includes the first field, the first field includes at least one bit corresponding to the at least one first channel, and the determining, based on the first frame, at least one available narrowband channel that can be used to transmit the NB signal includes: if a value of a first bit in the at least one bit corresponding to the at least one first channel is a first value, determining that a frequency domain resource of a first channel corresponding to the first bit can be used to transmit the NB signal, where a frequency domain resource of the at least one available narrowband channel includes the frequency domain resource of the first channel corresponding to the first bit; or if a value of a first bit in the at least one bit corresponding to the at least one first channel is a second value, determining that a frequency domain resource of a first channel corresponding to the first bit cannot be used to transmit the NB signal.

With reference to the fifth aspect, in some implementations of the fifth aspect, the first frame includes a third field, the third field indicates an offset value between a frequency of the available narrowband channel and a frequency of a reference narrowband channel, and the frequency of the reference narrowband channel is a preset value; and the determining, based on the first frame, at least one available narrowband channel that can be used to transmit the NB signal includes: determining, based on the first frame, an available frequency domain resource that can be used to transmit the NB signal; and determining the at least one available narrowband channel based on the available frequency domain resource and the third field.

With reference to the fifth aspect, in some implementations of the fifth aspect, the first frame further includes a fourth field, and the fourth field is used to determine the bandwidth of the available narrowband channel; and the determining, based on the first frame, at least one available narrowband channel that can be used to transmit the NB signal includes: determining, based on the first frame, an available frequency domain resource that can be used to transmit the NB signal; and determining the at least one available narrowband channel based on the available frequency domain resource and the fourth field.

With reference to the fifth aspect, in some implementations of the fifth aspect, the first frame further includes a fifth field, and the fifth field indicates the bandwidth of the first channel.

With reference to the fifth aspect, in some implementations of the fifth aspect, the first frame further includes a sixth field, and the sixth field is used to determine duration of a time period in which the available narrowband channel can be used to transmit the NB signal and/or a start moment of the time period; and the method further includes: determining, based on the first frame, the duration of the time period in which the available narrowband channel can be used to transmit the NB signal and/or the start moment of the time period.

With reference to the fifth aspect, in some implementations of the fifth aspect, the first frame further includes a seventh field, and the seventh field indicates whether the first frame includes at least one of the following fields: the first field, at least one scaling factor field, the third field, the fourth field, the fifth field, or the sixth field.

According to a sixth aspect, an apparatus is provided. The apparatus is configured to perform the method according to any one of the first aspect to the fifth aspect. Specifically, the apparatus may include units and/or modules configured to perform the method according to any one of the first aspect or the foregoing implementations of the first aspect; or include units and/or modules configured to perform the method according to any one of the second aspect or the foregoing implementations of the second aspect, for example, a processing unit and/or a transceiver unit; or include units and/or modules configured to perform the method according to any one of the third aspect or the foregoing implementations of the third aspect, for example, a processing unit and/or a transceiver unit; or include units and/or modules configured to perform the method according to any one of the fourth aspect or the foregoing implementations of the fourth aspect, for example, a processing unit and/or a transceiver unit; or be configured to perform the fifth aspect.

In an implementation, the apparatus is a device (for example, a transmit end device or a receive end device). When the apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a transmit end device or a receive end device). When the apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a seventh aspect, an apparatus is provided. The apparatus includes: a memory, configured to store a program; and at least one processor, configured to execute a computer program or instructions stored in the memory, to perform the method according to any one of the first aspect to the fifth aspect.

In an implementation, the apparatus is a device (for example, a transmit end device or a receive end device).

In another implementation, the apparatus is a chip, a chip system, or a circuit used in a device (for example, a transmit end device or a receive end device).

According to an eighth aspect, this application provides a processor, configured to perform the methods according to the foregoing aspects.

Operations such as sending and/or receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related description. This is not limited in this application.

According to a ninth aspect, a computer-readable storage medium is provided. The computer-readable storage medium stores program code executed by a device. When the program code is run on a computer, the method according to any one of the first aspect to the fifth aspect is performed.

According to a tenth aspect, a computer program product including instructions is provided. When the computer program product runs on a computer, the computer is enabled to perform the method according to any one of the first aspect to the fifth aspect.

According to an eleventh aspect, a chip is provided. The chip includes a processor and a communication interface. The processor reads, through the communication interface, instructions stored in a memory, to perform the method according to any one of the first aspect to the fifth aspect.

Optionally, in an implementation, the chip further includes the memory. The memory stores a computer program or the instructions. The processor is configured to execute the computer program or instructions stored in the memory. When the computer program or instructions are executed, the processor is configured to perform the method according to any one of the first aspect to the fifth aspect.

According to a twelfth aspect, a communication system is provided, including the transmit end device and the receive end device described above.

**BRIEF DESCRIPTION OF DRAWINGS**

FIG. 1 is a diagram of two application scenarios to which an embodiment of this application is applicable;

FIG. 2 is a diagram of a UWB signal;

FIG. 3 is a diagram of an architecture of a ranging/positioning system;

FIG. 4 is a schematic flowchart of a narrowband-assisted UWB ranging;

FIG. 5 is a schematic flowchart of a communication method according to an embodiment of this application;

FIG. 6 is a diagram of a narrowband channel division manner applicable to an embodiment of this application;

FIG. 7 is a diagram of a Wi-Fi channel division manner applicable to an embodiment of this application;

FIG. 8 is a diagram of a relationship between a narrowband channel and a Wi-Fi channel;

FIG. 9 is a diagram of a relationship between a narrowband channel and a Wi-Fi channel;

FIG. 10 is a diagram of a structure of a first frame according to an embodiment of this application;

FIG. 11 is a diagram of determining, based on a first frame, a frequency domain resource that can be used to transmit an NB signal;

FIG. 12 is a schematic flowchart of a communication method according to an embodiment of this application;

FIG. 13 is a diagram of a communication method according to an embodiment of this application;

FIG. 14 is a schematic flowchart of a communication method according to an embodiment of this application;

FIG. 15 is a diagram of an apparatus 1500 according to an embodiment of this application;

FIG. 16 is a diagram of an apparatus 1600 according to an embodiment of this application; and

FIG. 17 is a diagram of a chip system 1700 according to an embodiment of this application.

**DESCRIPTION OF EMBODIMENTS**

The following describes technical solutions of embodiments in this application with reference to accompanying drawings.

Embodiments of this application are applicable to an ultra-wideband (ultra-wideband, UWB) technology-based wireless personal area network (wireless personal area network, WPAN). Currently, a standard for the WPAN is the institute of electrical and electronics engineers (institute of electrical and electronics engineers, IEEE) 802.15 series. The WPAN may be used for communication between digital auxiliary devices in a small range, for example, a telephone, a computer, and an auxiliary device, and a working range of the WPAN is usually within 10 m. Technologies supporting the wireless personal area network include Bluetooth (Bluetooth), ZigBee (ZigBee), ultra-wideband, an IrDA infrared (infrared) connection technology, HomeRF, and the like. A person skilled in the art easily understands that aspects in this application may be extended to other networks using various standards or protocols, for example, a wireless local area network (wireless local area network, WLAN), a high performance radio LAN (high performance radio LAN, HIPERLAN) (a wireless standard similar to the IEEE 802.11 standard, mainly used in Europe), a wide area network (WAN), or another network that is currently known or developed in the future. From a perspective of network composition, the WPAN is located at a bottom layer of an entire network architecture and is for a wireless connection between devices in a small range, that is, a point-to-point short-range connection, and may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. FFD devices can communicate with each other, and the FFD device and the RFD device can communicate with each other. RFD devices cannot directly communicate with each other, and can only communicate with the FFD device, or forward data externally via one FFD device. An FFD device associated with the RFD is referred to as a coordinator (coordinator) of the RFD. The RFD device is mainly for a simple control application, like a light switch and a passive infrared sensor, transmits a small amount of data, and occupies a small number of transmission resources and communication resources. Therefore, costs of the RFD device are low. The coordinator may also be referred to as a personal area network (personal area network, PAN) coordinator, a central control node, or the like. The PAN coordinator is a main control node of an entire network, and each ad hoc network can have only one PAN coordinator having functions of member identity management, link information management, and packet forwarding. Optionally, the device in embodiments of this application may be a device that supports a plurality of WPAN standards, such as 802.15.4a, 802.15.4z, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk or a magnetic tape), an optical disc (for example, a compact disc (compact disc, CD), a digital versatile disc (digital versatile disc, DVD)), a smart card and a flash storage component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

Embodiments of this application are further applicable to a wireless local area network system, like an internet of things (internet of things, IoT) network or a vehicle-to-everything (vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, and a future 6th generation (6th generation, 6G) communication system.

The foregoing communication systems to which this application is applicable are merely examples for description, and communication systems to which this application is applicable are not limited thereto. This is uniformly described herein, and details are not described below again.

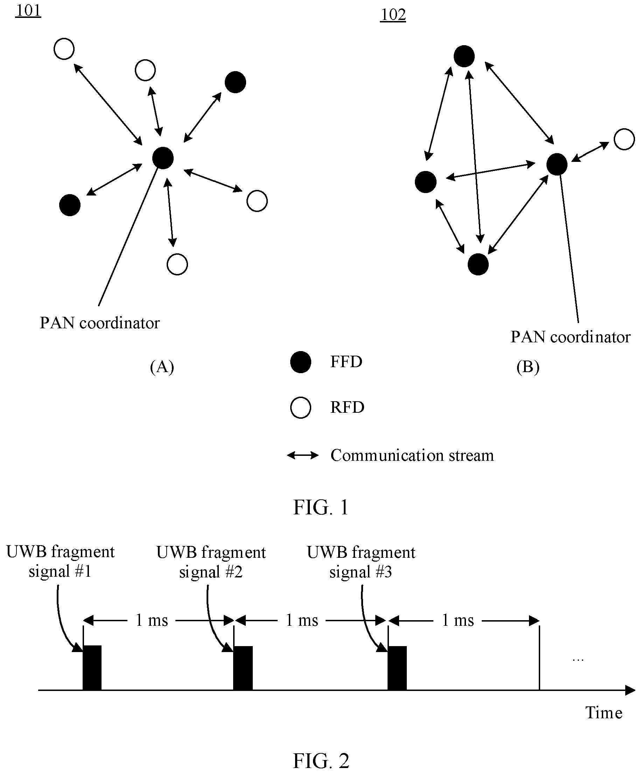

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN coordinator. In the communication system with the star topology, the PAN coordinator performs data transmission with one or more other devices, in other words, a one-to-many or many-to-one data transmission architecture may be established between a plurality of devices. In a system 102 shown in (B) in FIG. 1, a plurality of FFD devices and one RFD device form a communication system with a peer-to-peer topology (peer-to-peer topology), where one FFD is a PAN coordinator. In the communication system with the peer-to-peer topology, a many-to-many data transmission architecture may be established between a plurality of different devices.

It should be understood that (A) in FIG. 1 and (B) in FIG. 1 are merely simplified diagrams as examples for ease of understanding, and do not constitute a limitation on an application scenario of this application. For example, the system 101 and/or the system 102 may further include another FFD and/or another RFD.

For ease of understanding of the technical solutions in embodiments of this application, some terms or concepts that may be used in embodiments of this application are first briefly described.

1. UWB technology: The UWB technology is a wireless communication/ranging/sensing technology that uses a nanosecond-level non-sinusoidal narrow impulse signal, and therefore occupies a wide spectral range. Due to its narrow impulse and extremely low radiation spectral density, a UWB system has advantages of a strong multipath resolution capability, low power consumption, high confidentiality, and the like, and is conducive to coexistence with another system, thereby improving spectral utilization and a system capacity.

As the federal communications commission (federal communications commission, FCC) approved entry of the UWB technology into the civil field in 2002, ultra-wideband wireless communication has become one of the popular physical layer technologies for short-range and high-speed wireless networks. Many world-renowned companies, research institutes, and standardization organizations are actively engaged in the research, development, and standardization of ultra-wideband wireless communication technologies. The institute of electrical and electronics engineers (institute of electrical and electronic engineers, IEEE) has incorporated the UWB technology into its IEEE 802 series wireless standards, and has released a UWB technology-based WPAN standard IEEE 802.15.4a and an evolved version IEEE 802.15.4z thereof. Currently, a next-generation UWB technology-based WPAN standard 802.15.4ab has been put on the agenda.

Because the UWB technology performs data transmission through receiving and sending of nanosecond-level or sub-nanosecond-level and extremely narrow impulses rather than a carrier in a conventional communication system, the UWB technology has a high requirement on time synchronization of a transceiver device. In addition, due to a large communication bandwidth of the UWB technology, the devices have high power consumption and complexity when a signal is received and sent on an ultra-wideband channel, and most UWB communication devices are driven by a battery. It is expected to further reduce power consumption of the UWB system in a next-generation standard. Therefore, all signals except ranging and sensing reference signals are received and sent in a narrowband system in a narrowband signal-assisted manner. This reduces overall power consumption overheads.

2. Power of a UWB signal: Due to a large bandwidth of an ultra-wideband system, during operating, to reduce interference to another narrowband device, an FCC imposes strict restrictions on power spectral density of UWB signals. According to the code of federal regulations (code of federal regulations, CFR), there are the following two main rules.

Rule 1: An average value of maximum power spectral density (power spectral density, PSD) of a transmitted UWB signal in one millisecond cannot be greater than 41.3 dBm per megahertz.

Rule 2: Maximum power of the transmitted UWB signal in any 50 MHz bandwidth cannot exceed 1 milliwatt.

Rule 1 limits total energy transmitted by a UWB in one millisecond (for example, 37 nJ at a 500 MHz bandwidth). The energy is transmitted in shorter time. This increases instantaneous power of a transmit signal, enlarges signal coverage, and increases a signal-to-noise ratio of a signal received at a receive end. Based on this, in some scenarios in which transmit power needs to be increased, a transmit end divides a to-be-transmitted UWB signal into a plurality of fragment signals, where a time length of each fragment signal is less than one millisecond, and then sends only one fragment signal in each millisecond.

FIG. 2 is a diagram of a UWB signal according to an embodiment of this application. It can be seen from FIG. 2 that a transmit end divides the to-be-transmitted UWB signal into a plurality of fragment signals (for example, a UWB fragment signal #1, a UWB fragment signal #2, a UWB fragment signal #3, and ... shown in FIG. 2). A time length of each fragment signal is less than one millisecond, and one of the fragment signals is sent in each millisecond.

3. Ranging or sensing: In a ranging or sensing scenario, precision of a measurement or sensing result is related to a signal bandwidth. A larger signal bandwidth indicates higher precision of a result obtained through sensing or ranging. Therefore, it may be considered that a reference signal for ranging or sensing is received and sent by using a UWB system, and another reference signal and/or data are/is transmitted according to a narrowband protocol. This can ensure ranging and sensing precision, and also reduce power consumption. Sensing in this application may be understood as a bottom-layer sensing technology in an internet of things technology architecture, and is a primary step for obtaining information and implementing object control in an internet of things. Ranging may be understood as measurement of a distance between devices, including but not limited to measurement of a distance between two objects in the internet of things.

For example, in this application, a UWB technical solution combining narrowband-assisted UWB and multi-millisecond transmission may also be referred to as narrowband-assisted multi-millisecond ultra-wideband (Narrowband-assisted multi-millisecond Ultra-wideband, NBA-MMS UWB).

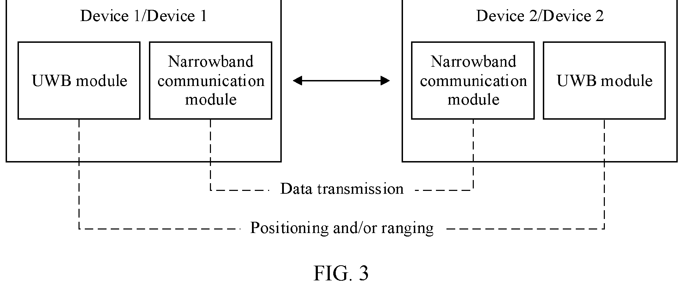

FIG. 3 is a diagram of an architecture of a ranging/positioning system according to an embodiment of this application. As shown in FIG. 3, the ranging/positioning system includes a plurality of devices (a device 1 and a device 2 shown in FIG. 3), which may be an apparatus in embodiments of this application. Each device includes at least a UWB module. Further, the device may further include a narrowband communication module. Any one of ranging, positioning, and communication may be performed between the UWB modules of the device 1 and the device 2. If the device includes the narrowband communication module, data transmission may be performed between the narrowband communication modules of the device 1 and the device 2 through a radio link.

In this application, the UWB module may be understood as an apparatus, a chip, a system, or the like that implements a UWB wireless communication technology. Correspondingly, the narrowband communication module may be understood as an apparatus, a chip, a system, or the like that implements a narrowband communication technology (like Wi-Fi, Bluetooth, or ZigBee (a ZigBee protocol)). In one device (device), a UWB module and a narrowband communication module may be different apparatuses or chips. Certainly, the UWB module and the narrowband communication module may alternatively be integrated into one apparatus or chip. Embodiments of this application do not limit implementations of the UWB module and the narrowband communication module in the device. According to the UWB technology, a communication apparatus can have a high data throughput and an apparatus can have high positioning precision.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user devices (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. In addition, the device may support the 802.15.4ab standard or a next-generation standard of 802.15.4ab. The device further supports a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, the 802.11ax, 802.11ac, 802.11n, 802.11g, 802.11b, 802.11a, and a next generation of the 802.11be.

4. Ranging round (ranging round): In a previous-generation IEEE 802.15.4z standard, a single ranging process is defined as a ranging round. A minimum processing time unit of each ranging round is a ranging slot (ranging slot). A ranging round is divided into three phases: a ranging control phase (ranging control phase) (also referred to as an initial synchronization phase), a ranging phase (ranging phase), and a ranging result report phase (measurement report phase).

It should be noted that the communication method provided in this application may be applied to narrowband protocol-assisted UWB ranging, and also be applied to narrowband protocol-assisted UWB sensing or another measurement procedure. For example, the communication method provided in this application is applied to a narrowband protocol-assisted UWB sensing procedure. A measurement control phase may be understood as a sensing control phase, a ranging phase may be understood as a sensing phase, and a ranging result report phase may be understood as a sensing result report phase.

In addition, it should be further noted that names of different phases of the foregoing single measurement round are merely examples, and do not constitute any limitation on the protection scope of this application. For example, the measurement control phase may be understood as a phase for configuring a parameter required in a measurement round; for another example, the measurement phase may be understood as a phase for measurement; and for still another example, the measurement result report phase may be understood as a phase for reporting a measurement result, and may also be referred to as an end of the measurement phase.

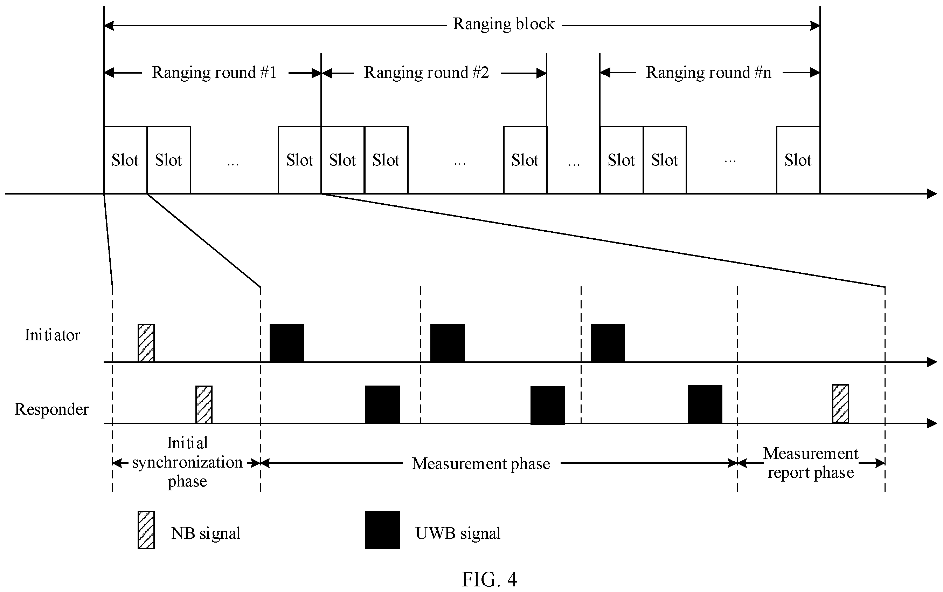

FIG. 4 shows a narrowband-assisted UWB ranging procedure. In FIG. 4, an initiator (initiator) and a responder (responder) are included. By way of example and not limitation, the initiator may be a device (for example, the FFD or the RFD shown in FIG. 1) having a communication capability in a WPAN. Similarly, the responder may also be a device (for example, the FFD or the RFD shown in FIG. 1) having a communication capability in the WPAN.

It can be seen from FIG. 4 that one ranging block (ranging block) may include a plurality of ranging rounds (ranging rounds), and one ranging round may include an initial synchronization phase, a measurement phase, and a measurement report phase. In the initial synchronization phase, an NB signal is exchanged between the initiator and the responder to complete processes such as configuration and synchronization for ranging. For example, the initiator sends a narrowband poll (Poll) signal, and the responder responds with a response (Resp) signal to perform a handshake. Information carried in the poll signal includes but is not limited to one or more of the following: a ranging round-related parameter configuration, a ranging signal preamble (preamble)-related parameter configuration (a preamble length, a sequence used by a preamble, and the like), a UWB packet type, a device role and slot (slot) duration, a quantity of slots, and the like. In the measurement phase, the initiator performs round-trip time with the responder on a UWB channel in a fragment transmission manner. In the measurement report phase, the responder sends a measurement result to the initiator by using the NB signal.

Currently, a candidate spectrum of a narrowband system includes an unlicensed national information infrastructure 3 (unlicensed national information infrastructure, UNII-3) and a UNII-5, and the spectrum overlaps a spectrum corresponding to a Wi-Fi channel. In this case, the NB signal exchanged between the initiator and the responder may be interfered by a Wi-Fi device.

In view of this, this application provides a communication method, to resolve a problem of how a narrowband system and a Wi-Fi system share a spectrum.

A specific structure of an execution body of the method provided in embodiments of this application is not specially limited in the following embodiments, provided that a program that records code of the method provided in embodiments of this application can be run to perform communication according to the method provided in embodiments of this application. For example, the method provided in embodiments of this application may be performed by a transceiver device, or a functional module that is in the transceiver device and that can invoke and execute a program.

For ease of understanding of embodiments of this application, the following points are described.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.

Second, "first", "second", and various numbers (for example, "a1", and "a2") shown in this application are merely for ease of description and are used for distinguishing between objects, but are not used to limit the scope of embodiments of this application. For example, the numbers are used to differentiate between different channels, but are not for describing a particular order or sequence. It should be understood that the objects described in such a way are interchangeable in an appropriate circumstance, so that a solution other than embodiments of this application can be described.

Third, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

Fourth, a "protocol" in embodiments of this application may be a standard protocol in the communication field, for example, may include a Wi-Fi protocol, and a related protocol applied to a future communication system. This is not limited in this application.

Without loss of generality, the following describes in detail the communication method provided in embodiments of this application by using interaction between an initiator device and a responder device as an example.

It should be understood that specific types of a transmit end device and a receive end device are not limited in this application, provided that the transmit end device and the receive end device are communication devices having NB signal receiving and sending functions.

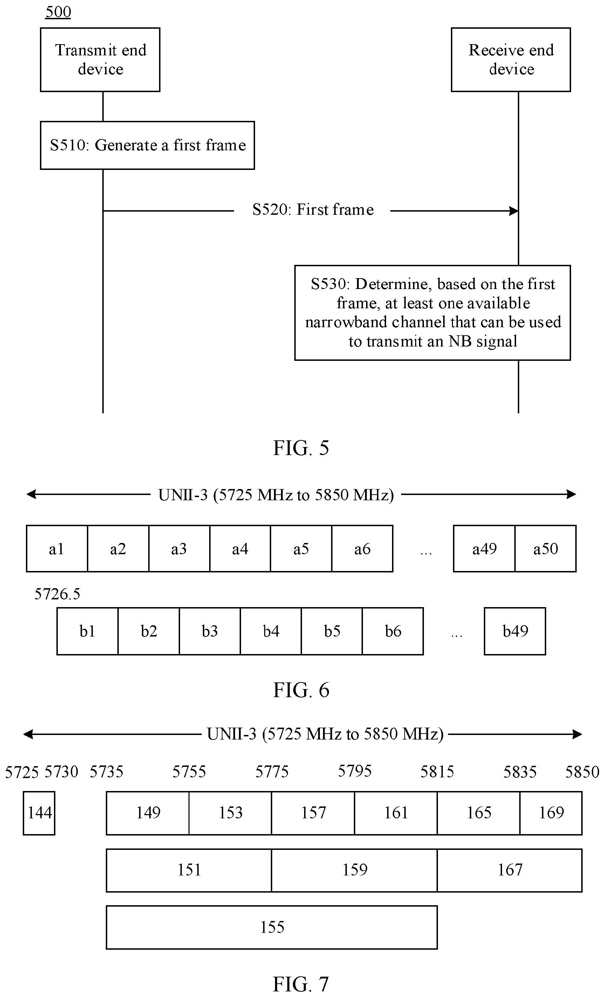

FIG. 5 is a schematic flowchart of a communication method 500 according to an embodiment of this application. The method may include the following steps.

S510: A transmit end device generates a first frame.

The first frame is used to determine at least one available narrowband channel that can be used to transmit an NB signal. The at least one available narrowband channel belongs to a plurality of candidate narrowband channels, and the plurality of candidate narrowband channels are obtained by performing channel division on a spectrum of a narrowband system.

FIG. 6 shows a plurality of candidate narrowband channels obtained by performing channel division on a spectrum UNII-3. A frequency band range of the UNII-3 is 5725 MHz to 5850 MHz, and a bandwidth of the UNII-3 is 125 MHz. As shown in FIG. 6, if a bandwidth of the candidate narrowband channel is 2.5 MHz, and a boundary of a first candidate narrowband channel (namely, a channel a1) is aligned with a boundary of the spectrum UNII-3, 50 candidate narrowband channels: the channel a1 to a channel a50, may be obtained by performing channel division on the spectrum UNII-3, and a frequency $f_n$ of an $n^{th}$ channel in the channel a1 to the channel a50 may be represented as $f_n$ = 5726.25MHz + $(n - 1) \times 2.5$MHz , where $1 \leq n \leq 50$. If the bandwidth of the candidate narrowband channel is 2.5 MHz, and the boundary of the first candidate narrowband channel (namely, the channel b1) is 5726.5 MHz, 49 candidate narrowband channels: the channel b1 to a channel b49, may be obtained by performing channel division on the spectrum UNII-3, and a frequency $f_m$ of an $m^{th}$ channel in the channel b1 to the channel b49 may be represented as $f_m$ = 5727.5MHz + $(m - 1) \times 2.5$MHz , where $1 \leq m \leq 49$.

It should be noted that the bandwidth of the candidate narrowband channel is not limited in this embodiment of this application. For example, the bandwidth of the candidate narrowband channel may be 1.25 MHz or 5 MHz. A candidate narrowband channel division manner is not limited in this embodiment of this application. For example, an offset between the boundary of the first candidate narrowband channel in the plurality of candidate narrowband channels and a boundary of a candidate spectrum of the narrowband system may be 0.5 MHz, 0.75 MHz, 1 MHz, or may be another value.

It should be further noted that FIG. 6 is described by using an example in which channel division is performed on the spectrum UNII-3 to obtain the plurality of candidate narrowband channels. If a spectrum of the narrowband system is a spectrum different from the spectrum UNII-3, for a manner of performing channel division on the another spectrum, refer to the manner shown in FIG. 6.

The first frame includes at least one of the following fields: a first field, a second field, or at least one scaling factor (scaling factor, SF) field.

The first field indicates whether a frequency domain resource of each of at least one Wi-Fi channel can be used to transmit an NB signal. The at least one Wi-Fi channel is obtained by performing channel division on a spectrum that can be used to transmit a Wi-Fi signal.

For example, the first field may be referred to as a Wi-Fi channel field. It should be understood that a name of the first field is not limited in this embodiment of this application.

FIG. 7 shows a Wi-Fi channel obtained by performing channel division on a spectrum that is in a spectrum UNII-3 and that can be used to transmit a Wi-Fi signal. As shown in FIG. 7, if a spectrum in a range of 5725 MHz to 5730 MHz in the spectrum UNII-3 can be used to transmit a Wi-Fi signal, and a bandwidth of the Wi-Fi channel is 20 MHz, the at least one Wi-Fi channel obtained by performing channel division on the spectrum that is in the spectrum UNII-3 and that can be used to transmit the Wi-Fi signal includes: a channel 144, a channel 149, a channel 153, a channel 157, a channel 161, a channel 165, and a channel 169. If a spectrum in a range of 5725 MHz to 5730 MHz in the spectrum UNII-3 cannot be used to transmit a Wi-Fi signal, and a bandwidth of the Wi-Fi channel is 20 MHz, the at least one Wi-Fi channel obtained by performing channel division on the spectrum that is in the spectrum UNII-3 and that can be used to transmit the Wi-Fi signal includes: a channel 149, a channel 153, a channel 157, a channel 161, a channel 165, and a channel 169. If the bandwidth of the Wi-Fi channel is 40 MHz, the at least one Wi-Fi channel obtained by performing channel division on the spectrum that is in the spectrum UNII-3 and that can be used to transmit the Wi-Fi signal includes: a channel 151, a channel 159, and a channel 167. If the bandwidth of the Wi-Fi channel is 80 MHz, the at least one Wi-Fi channel obtained by performing channel division on the spectrum that is in the spectrum UNII-3 and that can be used to transmit the Wi-Fi signal includes the channel 155.

For example, a first field includes at least one bit corresponding to at least one Wi-Fi channel. If a value of a first bit in the at least one bit corresponding to the at least one Wi-Fi channel is a first value, a frequency domain resource of a Wi-Fi channel corresponding to the first bit can be used to transmit an NB signal; or if a value of a first bit in the at least one bit corresponding to the at least one Wi-Fi channel is a second value, a frequency domain resource of a Wi-Fi channel corresponding to the first bit cannot be used to transmit an NB signal. The first value is 0, and the second value is 1; or the first value is 1, and the second value is 0.

A correspondence between the at least one Wi-Fi channel and the at least one bit is not limited in this embodiment of this application. For example, the at least one Wi-Fi channel is in a one-to-one correspondence with the at least one bit. For example, if the at least one Wi-Fi channel includes six channels: a channel 149, a channel 153, a channel 157, a channel 161, a channel 165, and a channel 169, the at least one bit includes six bits that are in a one-to-one correspondence with the six channels. For another example, the at least one Wi-Fi channel and the at least one bit are in a many-to-one relationship. For example, the at least one Wi-Fi channel includes the six channels, the at least one bit includes three bits, and each of the three bits corresponds to two Wi-Fi channels in the at least one Wi-Fi channel.

For another example, if the first field includes a bit corresponding to a first Wi-Fi channel in the at least one Wi-Fi channel, and the first field includes a bit corresponding to a second Wi-Fi channel in the at least one Wi-Fi channel, a first frequency domain resource corresponding to the first Wi-Fi channel, a second frequency domain resource corresponding to the second Wi-Fi channel, and a frequency domain resource between the first frequency domain resource and the second frequency domain resource cannot be used to transmit an NB signal; or a first frequency domain resource, a second frequency domain resource, and a frequency domain resource between the first frequency domain resource and the second frequency domain resource can be used to transmit an NB signal; or a frequency domain resource other than the following frequency domain resources in frequency domain resources of the at least one Wi-Fi channel can be used to transmit an NB signal: a first frequency domain resource, a second frequency domain resource, and a frequency domain resource between the first frequency domain resource and the second frequency domain resource; or a frequency domain resource other than the following frequency domain resources in frequency domain resources of the at least one Wi-Fi channel cannot be used to transmit an NB signal: a first frequency domain resource, a second frequency domain resource, and a frequency domain resource between the first frequency domain resource and the second frequency domain resource.

For another example, the first field includes at least one of the following subfields: a first subfield, a second subfield, or a third subfield.

The first subfield includes at least one bit that is in a one-to-one correspondence with at least one Wi-Fi channel whose bandwidth is a bandwidth #1. If a value of a bit #1 in the at least one bit included in the first subfield is a first value, a frequency domain resource of a Wi-Fi channel corresponding to the bit #1 can be used to transmit the NB signal; or if a value of a bit #1 is a second value, a frequency domain resource of a Wi-Fi channel corresponding to the bit #1 cannot be used to transmit the NB signal. For example, the bandwidth #1 is 20 MHz.

The second subfield includes at least one bit that is in a one-to-one correspondence with at least one Wi-Fi channel whose bandwidth is a bandwidth #2. If a value of a bit #2 in the at least one bit included in the second subfield is a first value, a frequency domain resource of a Wi-Fi channel corresponding to the bit #2 can be used to transmit the NB signal; or if a value of a bit #2 is a second value, a frequency domain resource of a Wi-Fi channel corresponding to the bit #2 cannot be used to transmit the NB signal. For example, the bandwidth #2 is 40 MHz.

The third subfield includes at least one bit that is in a one-to-one correspondence with at least one Wi-Fi channel whose bandwidth is a bandwidth #3. If a value of a bit #3 in the at least one bit included in the third subfield is a first value, a frequency domain resource of a Wi-Fi channel corresponding to the bit #3 can be used to transmit the NB signal; or if a value of a bit #3 is a second value, a frequency domain resource of a Wi-Fi channel corresponding to the bit #3 cannot be used to transmit the NB signal. For example, the bandwidth #3 is 80 MHz.

A second field indicates whether a frequency domain resource of each of at least one narrowband channel can be used to transmit an NB signal, and the frequency domain resource of each of the at least one narrowband channel includes a frequency domain resource that cannot be used to transmit a Wi-Fi signal.

For example, the second field may be referred to as a non-Wi-Fi occupied channel field. It should be understood that a name of the second field is not limited in this embodiment of this application.

The at least one narrowband channel belongs to a plurality of reference narrowband channels, and the plurality of reference narrowband channels are obtained by performing channel division on a spectrum of the narrowband system in a predefined channel division manner. The predefined channel division manner is the same as a target channel division manner, or the predefined channel division manner is different from a target channel division manner. This is not limited in this embodiment of this application. The target channel division manner is used for channel division on the spectrum of the narrowband system to obtain the plurality of candidate narrowband channels. It may be understood that if the predefined channel division manner is the same as the target channel division manner, the plurality of reference narrowband channels are the same as the plurality of candidate narrowband channels. In other words, the at least one narrowband channel belongs to the plurality of candidate narrowband channels.

For example, the predefined channel division manner is that a bandwidth of the reference narrowband channel is 2.5 MHz, and a boundary of a first narrowband channel in the plurality of reference narrowband channels is aligned with a boundary of the spectrum of the narrowband system. For example, if the spectrum of the narrowband system is a spectrum UNII-3, the plurality of reference narrowband channels obtained by performing channel division on the spectrum UNII-3 in the predefined channel division manner include the channel a1 to the channel a50 in FIG. 6.

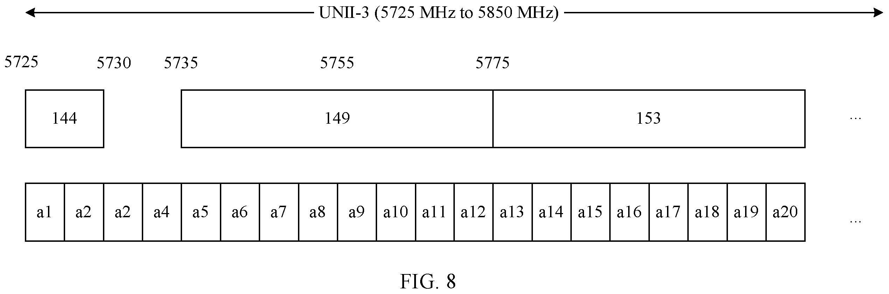

As shown in FIG. 8, it is assumed that the plurality of reference narrowband channels include the channel a1 to the channel a50 shown in FIG. 6, and the at least one Wi-Fi channel includes the channel 149, the channel 153, the channel 157, the channel 161, the channel 165, and the channel 169 shown in FIG. 7. Because a frequency domain resource of each of the channel a1 to the channel a4 includes a frequency domain resource that cannot be used to transmit the Wi-Fi signal, the at least one narrowband channel includes the channel a1 to the channel a4. If the at least one Wi-Fi channel further includes the channel 144, a frequency domain resource of each of the channel a1 and the channel a2 can be used to transmit the Wi-Fi signal, and the at least one narrowband channel does not include the channel a1 or the channel a2.

For another example, the predefined channel division manner is that a bandwidth of the reference narrowband channel is 2.5 MHz, and an offset between a boundary of a first narrowband channel in the plurality of reference narrowband channels and a boundary of the spectrum of the narrowband system is 1.25 MHz. For example, if the spectrum of the narrowband system is a spectrum UNII-3, the plurality of reference narrowband channels obtained by performing channel division on the spectrum UNII-3 in the predefined channel division manner include the channel b1 to the channel b49 in FIG. 6.

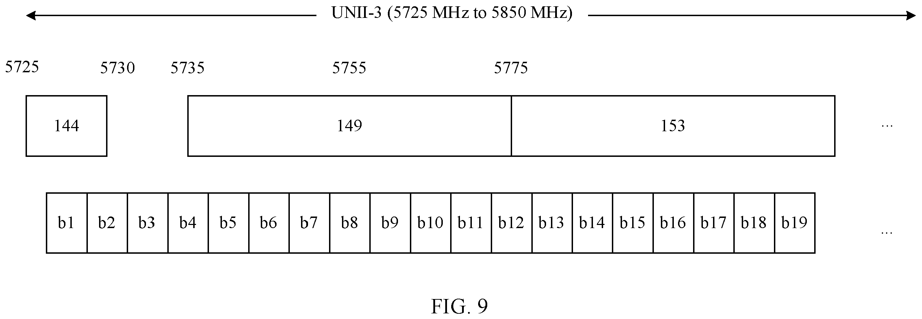

As shown in FIG. 9, it is assumed that the plurality of narrowband channels include the channel b1 to the channel b49 shown in FIG. 6, and the at least one Wi-Fi channel comprises the channel 149, the channel 153, the channel 157, the channel 161, the channel 165, and the channel 169 shown in FIG. 7. Because a frequency domain resource of each of the channel b1 to the channel b4 includes a frequency domain resource that cannot be used to transmit the Wi-Fi signal, the at least one narrowband channel includes the channel b1 to the channel b3. If the at least one Wi-Fi channel further includes the channel 144, a frequency domain resource of the channel b1 can be used to transmit the Wi-Fi signal, and further the at least one narrowband channel does not include the channel b1.

For example, the second field includes at least one bit corresponding to the at least one narrowband channel. If a value of a second bit in the at least one bit corresponding to the at least one narrowband channel is a first value, a frequency domain resource of a narrowband channel corresponding to the second bit can be used to transmit the NB signal; or if a value of a second bit in the at least one bit corresponding to the at least one narrowband channel is a second value, a frequency domain resource of a narrowband channel corresponding to the second bit cannot be used to transmit the NB signal.

A correspondence between the at least one narrowband channel and the at least one bit is not limited in this embodiment of this application. For example, the at least one narrowband channel is in a one-to-one correspondence with the at least one bit. For example, if the at least one narrowband channel includes four channels: a channel a1, a channel a2, a channel a3, and a channel a4, the at least one bit includes four bits that are in a one-to-one correspondence with the four channels. For another example, the at least one narrowband channel and the at least one bit are in a many-to-one relationship. For example, the at least one narrowband channel includes the four channels, the at least one bit includes two bits, and each of the two bits corresponds to two narrowband channels in the at least one narrowband channel.

At least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

For example, the first scaling factor is denoted as $SF_1$, a frequency of the Wi-Fi channel corresponding to the first scaling factor field is denoted as $f^{\text{Wi-Fi}}$, and a bandwidth of the Wi-Fi channel corresponding to the first scaling factor field is denoted as $B^{\text{Wi-Fi}}$. In this case, the frequency domain resource that is determined based on the first scaling factor and the frequency domain resource of the Wi-Fi channel corresponding to the first scaling factor field and that can be used to transmit the NB signal is represented as $\left[\, f^{\text{Wi-Fi}} - \dfrac{B^{\text{Wi-Fi}}}{2} \times SF_1, f^{\text{Wi-Fi}} - \dfrac{B^{\text{Wi-Fi}}}{2} \times SF_1 \,\right]$, or is represented as

$$\left[ f^{\text{Wi-Fi}} - \frac{B^{\text{Wi-Fi}}}{2}, \left( f^{\text{Wi-Fi}} - \frac{B^{\text{Wi-Fi}}}{2} \right) + \frac{B^{\text{Wi-Fi}}}{2} \times SF_1 \right] \quad \text{and} \quad \left[ \left( f^{\text{Wi-Fi}} + \frac{B^{\text{Wi-Fi}}}{2} \right) - \frac{B^{\text{Wi-Fi}}}{2} \times SF_1, f^{\text{Wi-Fi}} + \frac{B^{\text{Wi-Fi}}}{2} \right] \quad \text{or is}$$

represented as $\left[ f^{\text{Wi-Fi}} - \dfrac{B^{\text{Wi-Fi}}}{2} - \dfrac{B^{\text{Wi-Fi}}}{2} \times SF_1, f^{\text{Wi-Fi}} - \dfrac{B^{\text{Wi-Fi}}}{2} + \dfrac{B^{\text{Wi-Fi}}}{2} \times SF_1 \right]$. Alternatively, the frequency domain resource that is determined based on the first scaling factor and the frequency domain resource of the Wi-Fi channel corresponding to the first scaling factor field and that cannot be used to transmit the NB signal is represented as

$$\left[\, f^{\text{Wi-Fi}} - \frac{B^{\text{Wi-Fi}}}{2} \times SF_1, f^{\text{Wi-Fi}} - \frac{B^{\text{Wi-Fi}}}{2} \times SF_1 \,\right], \quad \text{or is represented as}$$

$$\left[ f^{\text{Wi-Fi}} - \frac{B^{\text{Wi-Fi}}}{2}, \left( f^{\text{Wi-Fi}} - \frac{B^{\text{Wi-Fi}}}{2} \right) + \frac{B^{\text{Wi-Fi}}}{2} \times SF_1 \right] \quad \text{and} \quad \left[ \left( f^{\text{Wi-Fi}} + \frac{B^{\text{Wi-Fi}}}{2} \right) - \frac{B^{\text{Wi-Fi}}}{2} \times SF_1, f^{\text{Wi-Fi}} + \frac{B^{\text{Wi-Fi}}}{2} \right], \quad \text{or}$$

is represented as $\left[ f^{\text{Wi-Fi}} - \dfrac{B^{\text{Wi-Fi}}}{2} - \dfrac{B^{\text{Wi-Fi}}}{2} \times SF_1, f^{\text{Wi-Fi}} - \dfrac{B^{\text{Wi-Fi}}}{2} + \dfrac{B^{\text{Wi-Fi}}}{2} \times SF_1 \right]$.

A correspondence between the at least one scaling factor field and the at least one Wi-Fi channel is not limited in this embodiment of this application. For example, the at least one scaling factor field is in a one-to-one correspondence with the at least one Wi-Fi channel. For another example, the at least one scaling factor field and the at least one Wi-Fi channel are in a many-to-one relationship.

For example, if the plurality of reference narrowband channels and the at least one Wi-Fi channel satisfy the following relationship: $f_{8n'} = f^{\text{Wi-Fi}}_{149+4(n'-1)} - 1.25$, a value of the scaling factor is M14, M is a positive integer, $1 \le M < 8$, $1 \le n' \le 6$, $f_{8n'}$ represents a frequency of an $8n'^{\text{th}}$ narrowband channel in the plurality of reference narrowband channels, and $f^{\text{Wi-Fi}}_{149+4(n'-1)}$ represents a frequency of a Wi-Fi channel whose channel number is [149+4(n'-1)].

For example, if a value of the scaling factor is any one of the following: 1/4, 3/4, 1, and 5/4, the scaling factor field may include two bits. For example, if the two bits included in the scaling factor field are "00", a value of the scaling factor indicated by the scaling factor field is 1/4. If the two bits included in the scaling factor field are "01", a value of the scaling factor indicated by the scaling factor field is 2/4. If the two bits included in the scaling factor field are "10", a value of the scaling factor indicated by the scaling factor field is 1. If the two bits included in the scaling factor field are "11", a value of the scaling factor indicated by the scaling factor field is 5/4.

For example, if a value of the scaling factor is any one of the following: 1/4, 1/2, 3/4, 1, and 5/4, the scaling factor field may include three bits. For example, if the two bits included in the scaling factor field are "000", a value of the scaling factor indicated by the scaling factor field is 1/4. If the two bits included in the scaling factor field are "001", a value of the scaling factor indicated by the scaling factor field is 1/2. If the two bits included in the scaling factor field are "010", a value of the scaling factor indicated by the scaling factor field is 3/4. If the two bits included in the scaling factor field are "011", a value of the scaling factor indicated by the scaling factor field is 1. If the two bits included in the scaling factor field are "100", a value of the scaling factor indicated by the scaling factor field is 5/4.

For another example, if the plurality of reference narrowband channels and the at least one Wi-Fi channel satisfy the following relationship: $f_{8n'} = f_{149+4(n'-1)}^{\text{Wi-Fi}}$, a value of the scaling factor is N/8, N is a positive odd number, and $1 \leq N < 8$.

For example, a value of the scaling factor is any one of the following: 3/8, 5/8, 7/8, 9/8, and 11/8. Alternatively, a value of the scaling factor is any one of the following: 3/8, 5/8, 7/8, and 9/8.

Optionally, if the predefined channel division manner described above is different from the target channel division manner, in other words, the plurality of candidate narrowband channels are different from the plurality of reference narrowband channels, the first frame further includes a third field and/or a fourth field. For example, if frequencies of the plurality of candidate narrowband channels are different from frequencies of the plurality of reference narrowband channels, the first frame includes the third field. For example, if bandwidths of the plurality of candidate narrowband channels are different from bandwidths of the plurality of reference narrowband channels, the first frame includes the fourth field.

For example, the third field may be referred to as a shift field, and the fourth field may be referred to as an extension field. It should be understood that names of the third field and the fourth field are not limited in this embodiment of this application.

The third field indicates an offset value between the frequency of the candidate narrowband channel and the frequency of the reference narrowband channel. As described above, at least one available narrowband channel belongs to the plurality of candidate narrowband channels. Therefore, it may be considered that the third field indicates an offset value between a frequency of the available narrowband channel and the frequency of the reference narrowband channel. Because the reference narrowband channel is determined in the predefined channel division manner, it may be considered that the frequency of the reference narrowband channel is a preset value.

For example, the third field may indicate an offset value between a frequency of a first candidate narrowband channel in the plurality of candidate narrowband channels and a frequency of a first reference narrowband channel in the plurality of reference narrowband channels. For another example, the third field may indicate an offset value between a frequency of a last candidate narrowband channel in the plurality of candidate narrowband channels and a frequency of a last reference narrowband channel in the plurality of reference narrowband channels.

For example, the third field may include two bits. If the two bits included in the third field are "00", the third field indicates that the offset value between the frequency of the candidate narrowband channel and the frequency of the reference narrowband channel is 0. If the two bits included in the third field are "01", the third field indicates that the offset value between the frequency of the candidate narrowband channel and the frequency of the reference narrowband channel is -1.25. If the two bits included in the third field are "10", the third field indicates that the offset value between the frequency of the candidate narrowband channel and the frequency of the reference narrowband channel is 1.25. The offset value "-1.25" indicates that a difference between the frequency of the candidate narrowband channel and the frequency of the reference narrowband channel is -1.25. The offset value "1.25" indicates that a difference between the frequency of the candidate narrowband channel and the frequency of the reference narrowband channel is 1.25.

The fourth field is used to determine a bandwidth of the candidate narrowband channel. In other words, the fourth field is used to determine a bandwidth of the available narrowband channel.

For example, the fourth field indicates the bandwidth of the candidate narrowband channel. If a possible bandwidth value of the candidate narrowband channel is 1.25 MHz or 2.5 MHz, the fourth field may include one bit. If the bit included in the fourth field is "0", the fourth field indicates that the bandwidth of the candidate narrowband channel is 1.25 MHz. If the bit included in the fourth field is "1", the bandwidth of the candidate narrowband channel indicated by the fourth field is 2.5 MHz.

For another example, the fourth field indicates a relationship between the bandwidth of the candidate narrowband channel and the bandwidth of the reference narrowband channel. For example, if the bandwidth of the reference narrowband channel is 2.5 MHz, and the possible bandwidth value of the candidate narrowband channel is 1.25 MHz or 2.5 MHz, the fourth field may include one bit. If the bit included in the fourth field is "0", the fourth field indicates that the bandwidth of the candidate narrowband channel is the same as the bandwidth of the reference narrowband channel. If the bit included in the fourth field is "1", the fourth field indicates that the bandwidth of the candidate narrowband channel is half of the bandwidth of the reference narrowband channel.

Optionally, if the first frame includes the first field, the first frame may further include a fifth field, and the fifth field indicates a bandwidth of the Wi-Fi channel. For example, the fifth field may include two bits. If the two bits included in the fifth field are "00", the fifth field indicates that the bandwidth of the Wi-Fi channel is 20 MHz. If the two bits included in the fifth field are "01", the fifth field indicates that the bandwidth of the Wi-Fi channel is 40 MHz. If the two bits included in the fifth field are "10", the fifth field indicates that the bandwidth of the Wi-Fi channel is 80 MHz.

For example, the fifth field may be referred to as a bandwidth field. It should be understood that a name of the fifth field is not limited in this embodiment of this application.

Optionally, the first frame further includes a sixth field, and the sixth field is used to determine duration of a time period in which the available narrowband channel can be used to transmit the NB signal and/or a start moment of the time period.

For example, the sixth field may be referred to as an effective time field. It should be understood that a name of the sixth field is not limited in this embodiment of this application.

For example, the sixth field includes a fourth subfield and/or a fifth subfield, the fourth subfield indicates an interval between the start moment of the time period and a moment at which the first frame is sent, and the fifth subfield indicates duration between the moments.

For example, a unit of the duration indicated by the fourth subfield is a measurement slot or measurement duration, and the measurement duration is duration required for performing data measurement once. That is, the fourth subfield indicates that the interval between the start moment of the time period and the moment at which the first frame is sent is L measurement slots or L pieces of measurement duration. It may be understood that the interval between the start moment of the time period in which the available narrowband channel can be used to transmit the NB signal and the moment at which the first frame is sent usually does not exceed 1s, and duration of one measurement slot is not less than 1 ms. Therefore, if the unit of the duration indicated by the fourth subfield is the measurement slot, the duration indicated by the fourth subfield includes a maximum of 1000 measurement slots. When there are a maximum of 1000 measurement slots, the fourth subfield includes a maximum of 10 bits. Similarly, if one piece of measurement duration includes 10 measurement slots, the duration indicated by the fourth subfield includes a maximum of 100 pieces of measurement duration, that is, the fourth subfield includes a maximum of seven bits.

For example, a unit of the duration indicated by the fifth subfield is a measurement slot or measurement duration.

Optionally, the first frame further includes a seventh field, and the seventh field indicates whether the first frame includes the following fields: the first field, the second field, the at least one scaling factor field, the third field, the fourth field, the fifth field, or the sixth field.

For example, the seventh field may be referred to as a field present indication field. It should be understood that a name of the seventh field is not limited in this embodiment of this application.

For example, the seventh field may include seven bits, and the seven bits are in a one-to-one correspondence with the seven fields. If a value of a bit #A in the seven bits is a first value, it indicates that the first frame includes a field corresponding to the bit #A. If a value of a bit #A in the seven bits is a second value, it indicates that the first frame does not include a field corresponding to the bit #A. For example, if the seven bits included in the seventh field are "1110000", it may indicate that the first frame includes the first field, the second field, and the at least one scaling factor field.

For another example, the seventh field may include three bits, in the three bits, one bit corresponds to the first field, one bit corresponds to the second field, and the last bit corresponds to the at least one scaling factor field. If a value of a bit #B in the three bits is a first value, it indicates that the first frame includes a field corresponding to the bit #B. If a value of a bit #B in the three bits is a second value, it indicates that the first frame does not include a field corresponding to the bit #B. For example, if the three bits included in the seventh field are "111", it may indicate that the first frame includes the first field, the second field, and the at least one scaling factor field. For another example, if the three bits included in the seventh field are "100", it may indicate that the first frame includes the first field.

For another example, the seventh field may include 10 bits that are in a one-to-one correspondence with the following fields: the first subfield, the second subfield, the third subfield, the second field, the at least one scaling factor field, the third field, the fourth field, the fifth field, the fourth subfield, and the fifth subfield.

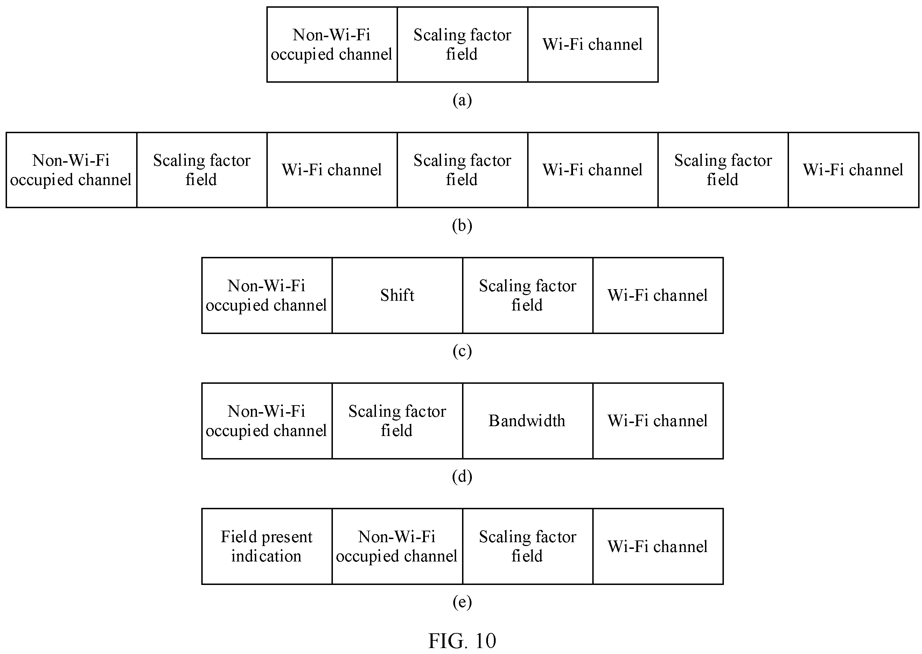

For example, if the first frame includes the first field, the second field, and the at least one scaling factor field, a diagram of a structure of the first frame may be shown in (a) in FIG. 10, or may be shown in (b) in FIG. 10. In the structure shown in (b) in FIG. 10, the plurality of Wi-Fi channels are combined to form the first field. If the first frame includes the first field, the second field, the at least one scaling factor field, and the third field, a diagram of a structure of the first frame may be shown in (c) in FIG. 10. If the first frame includes the first field, the second field, the at least one scaling factor field, and the fifth field, a diagram of a structure of the first frame may be shown in (d) in FIG. 10. If the first frame includes the first field, the second field, the at least one scaling factor field, and the seventh field, a diagram of a structure of the first frame may be shown in (e) in FIG. 10. It should be noted that FIG. 10 is merely an example, and the structure of the first frame may alternatively be in another form. This is not limited in this embodiment of this application.

For example, if the structure of the first frame is shown in (a) in FIG. 10, and the relationship between the plurality of reference narrowband channels and the at least one Wi-Fi channel is shown in FIG. 8, descriptions of fields included in the first frame are shown in Table 1.

Table 1

| Field | Occupied bits | Descriptions |
|---|---|---|
| Non-Wi-Fi occupied channel field | B0 to B3 | BX corresponds to a channel a(X+1). If BX is a first value, the channel corresponding to BX can be used to transmit an NB channel; or if BX is a second value, the channel corresponding to BX can be used to transmit an NB channel. X=0, 1, 2, 3. |
| Scaling factor field | B4 and B5 | If the value is "00", a value of the scaling factor is 1/4; if the value is "01", a value of the scaling factor is 3/4; if the value is "10", a value of the scaling factor is 1; or if the value is "11", a value of the scaling factor is 5/4. |
| Wi-Fi channel field | B6 to B11 or B6 to B15 | B5 to B11 respectively correspond to the channel 149, the channel 153, the channel 157, the channel 161, the channel 165, and the channel 169, B12 to B14 respectively correspond to the channel 151, the channel 159, and the channel 167, and B15 corresponds to the channel 155. If BY is a first value, a channel corresponding to BY can be used to transmit the NB channel; or if BY is a second value, a channel corresponding to BY can be used to transmit an NB channel. Y=5, 6, 7, 8, 9, 10, and 11, or Y=5, 6, 7, 8, 9, 10, 11, 12, 13, and 14. |

Optionally, before S510, the method 500 further includes S540: The transmit end device receives a second frame from a receive end device, where the second frame is used to determine a first narrowband channel that can be used to transmit the NB signal. For a structure of the second frame, refer to the foregoing description of the first frame. Details are not described in this embodiment of this application again.

For example, the transmit end device receives the second frame from the receive end device in a measurement control phase, or receives the second frame from the receive end device in a measurement result report phase.

Optionally, the transmit end device may generate the first frame based on the second frame. For example, a frequency domain resource of the at least one narrowband channel determined based on the first frame generated by the transmit end device belongs to a frequency domain resource of the first narrowband channel.

S520: The transmit end device sends the first frame to the receive end device.

Correspondingly, the receive end device receives the first frame from the transmit end device.

In a possible implementation, for first frames of different structures, information element (information element, IE) numbers corresponding to the first frames sent by the transmit end device are different. For example, if the first frame includes the first field, the second field, and the at least one scaling factor field, an IE number corresponding to the first frame is an IE #1. If the first frame includes the first field and the second field, an IE number corresponding to the first frame is an IE #2. If the first frame includes the first field, the second field, the at least one scaling factor field, and the sixth field, an IE number corresponding to the first frame is an IE #3. Correspondingly, after receiving the first frame, the receive end device may determine the structure of the first frame based on the IE number corresponding to the first frame.

In a possible implementation, if the first frame includes the seventh field, the receive end device may determine, based on the seventh field, a field further included in the first frame.

S530: The receive end device determines the at least one available narrowband channel based on the first frame.

For example, the receive end device directly determines the at least one available narrowband channel based on the first frame, or the receive end device determines, based on the first frame, an available frequency domain resource that can be used to transmit the NB signal, and then determines the at least one available narrowband channel based on the available frequency domain resource.

The following describes a manner in which the receive end device determines the at least one available narrowband channel based on the first frame by using an example in which the first frame received by the receive end device includes the first field, the second field, and the at least one scaling factor field.

If the first field includes the at least one bit corresponding to the at least one Wi-Fi channel, the receive end device may determine, based on the first field, whether a frequency domain of each of the at least one Wi-Fi channel can be used to transmit the NB signal. That is, if a value of a first bit in the at least one bit is a first value, the receive end device determines that a frequency domain resource of a Wi-Fi channel corresponding to the first bit can be used to transmit the NB signal; or if a value of a first bit in the at least one bit is a first value, the receive end device determines that a frequency domain resource of a Wi-Fi channel corresponding to the first bit can be used to transmit the NB signal.

Alternatively, if the first field includes a bit corresponding to a first Wi-Fi channel in the at least one Wi-Fi channel, and the first field includes a bit corresponding to a second Wi-Fi channel in the at least one Wi-Fi channel, the receive end device may determine that a first frequency domain resource corresponding to the first Wi-Fi channel, a second frequency domain resource corresponding to the second Wi-Fi channel, and a frequency domain resource between the first frequency domain resource and the second frequency domain resource cannot be used to transmit the NB signal; or determine that a first frequency domain resource, a second frequency domain resource, and a frequency domain resource between the first frequency domain resource and the second frequency domain resource can be used to transmit the NB signal; or determine that a frequency domain resource other than the following frequency domain resources in frequency domain resources of the at least one Wi-Fi channel can be used to transmit the NB signal: a first frequency domain resource, a second frequency domain resource, and a frequency domain resource between the first frequency domain resource and the second frequency domain resource; or determine that a frequency domain resource other than the following frequency domain resources in frequency domain resources of the at least one Wi-Fi channel cannot be used to transmit the NB signal: a first frequency domain resource, a second frequency domain resource, and a frequency domain resource between the first frequency domain resource and the second frequency domain resource.

For example, if the at least one Wi-Fi channel includes the channel 149, the channel 153, the channel 157, the channel 161, the channel 165, and the channel 169, the six channels may be indicated by three bits. For example, "000" indicates the channel 149, "001" indicates the channel 153, "010" indicates the channel 157, "011" indicates the channel 161, "100" indicates the channel 165, and "101" indicates the channel 169. Further, if the first field includes six bits, and the six bits are "000010", the receive end device may determine that the first field includes the bit corresponding to the channel 149 and the bit corresponding to the channel 157. Further, the receive end device may determine whether the frequency domain resource of each of the at least one Wi-Fi channel can be used to transmit the NB signal.

As described above, the bandwidth of the Wi-Fi channel may be 20 MHz, 40 MHz, or 80 MHz. If the first frame further includes the fifth field, the receive end device may determine the bandwidth of the Wi-Fi channel based on the fifth field. If the first frame does not include the fifth field, the receive end device considers by default that the bandwidth of the Wi-Fi channel is 20 MHz, or considers by default that the bandwidth of the Wi-Fi channel is 40 MHz, or considers by default that the bandwidth of the Wi-Fi channel is 80 MHz.

It should be noted that if the first frame does not include the first field, the receive end device may consider by default that the frequency domain resource of the at least one Wi-Fi channel can be used to transmit the NB signal, or consider by default that the frequency domain resource of the at least one Wi-Fi channel cannot be used to transmit the NB signal. Alternatively, the receive end device determines, based on the first field included in the first frame received last time, whether the frequency domain resource of the at least one Wi-Fi channel can be used to transmit the NB signal.

After determining, based on the first field, whether each of the at least one Wi-Fi channel can be used to transmit the NB signal, the receive end device continues to determine, based on the scaling factor field, the frequency domain resource that can be used to transmit the NB signal.

For example, if the receive end device determines, based on the first field, that a frequency domain resource of the first Wi-Fi channel in the at least one Wi-Fi channel cannot be used to transmit the NB signal, the receive end device determines, based on the frequency domain resource of the first Wi-Fi channel and a scaling factor field corresponding to the first Wi-Fi channel, the frequency domain resource that can be used to transmit the NB signal. For a manner in which the receive end device determines, based on the frequency domain resource of the first Wi-Fi channel and the scaling factor field corresponding to the first Wi-Fi channel, the frequency domain resource that can be used to transmit the NB signal, refer to the description in S510.

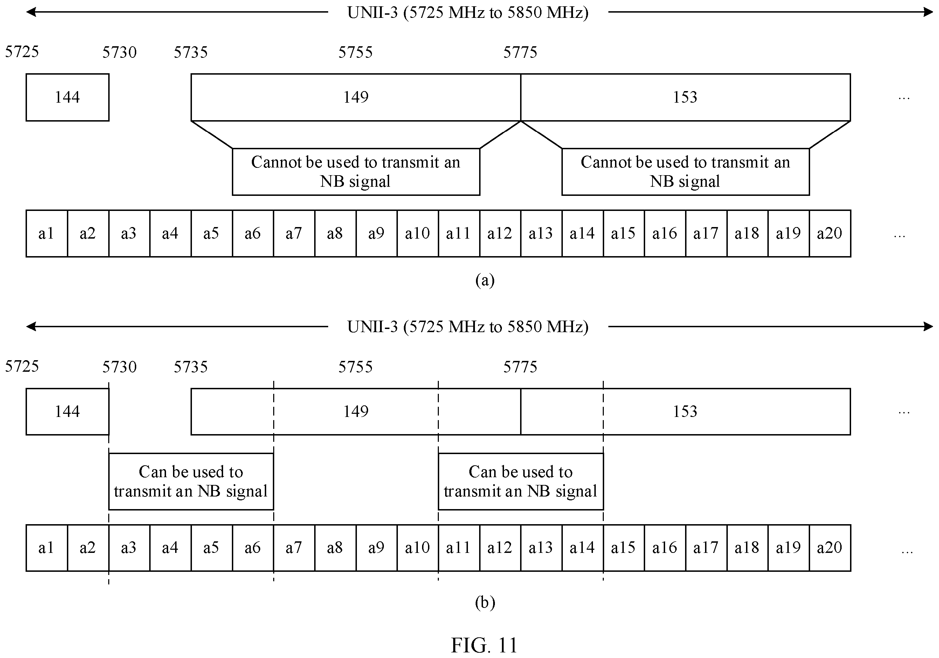

As shown in (a) in FIG. 11, it is assumed that the receive end device determines, based on the first field, that frequency domain resources of the channel 149 and the channel 153 cannot be used to transmit the NB signal, frequency domain resources of the channel 157, the channel 161, the channel 165, and the channel 169 can be used to transmit the NB signal, and the receive end device determines, based on the at least one scaling factor field, that scaling factors corresponding to the channel 149 and the channel 153 are 3/4. In this case, the receive end device may determine, in the following manner, the frequency domain resource that cannot be used to transmit the NB signal. To be specific, a frequency domain resource that is in the frequency domain resource of the channel 149 and that cannot be used to transmit the NB signal is $[f_{149}^{\text{Wi-Fi}} - 10 \times 3/4, f_{149}^{\text{Wi-Fi}} - 10 \times 3/4]$, and a frequency domain resource that is in the frequency domain resource of the channel 153 and that cannot be used to transmit the NB signal is $[f_{153}^{\text{Wi-Fi}} - 10 \times 3/4, f_{153}^{\text{Wi-Fi}} - 10 \times 3/4]$. Further, after excluding, from the frequency domain resources of the at least one Wi-Fi channel, the frequency domain resource that cannot be used to transmit the NB signal, the receive end device may determine a frequency domain resource that is in the frequency domain resources of the at least one Wi-Fi channel and that can be used to transmit the NB signal. To be specific, the receive end device determines that frequency domain resources that are in the frequency domain resources of the at least one Wi-Fi channel and that can be used to transmit the NB signal include 5735 MHz to 5737.5 MHz, 5772.5 MHz to 5777.5 MHz, and 5792.5 MHz. to 5780 MHz.

As shown in (b) in FIG. 11, it is assumed that the receive end device determines, based on the first field, that frequency domain resources of the channel 149 to the channel 169 cannot be used to transmit the NB signal, and the receive end device determines, based on the at least one scaling factor field, that scaling factors corresponding to the channel 149 to the channel 169 are 1/2. In this case, the receive end device may determine, in the following manner, the frequency domain resource that can be used to transmit the NB signal, that is, the frequency domain resource that cannot be used to transmit the NB signal is $[5735 + (t-1)20 - 10 \times 1/2, 5735 + (t-1)20 + 10 \times 1/2]$, where t is a positive integer, and $1 \leq t \leq 6$. To be specific, frequency domain resources that can be used to transmit the NB signal and that are determined by the receive end device include 5730 MHz to 5740 MHz, 5750 MHz to 5760 MHz, 5770 MHz to 5780 MHz, 5790 MHz to 5800 MHz, 5810 MHz to 5820 MHz, and 5830 MHz to 5840 MHz.

It should be noted that if the first frame does not include the at least one scaling factor field, the receive end device may determine that a value of the scaling factor is a preset value, for example, determine that a value of the scaling factor is 1. Alternatively, the receive end device determines the value of the scaling factor based on a scaling factor resource included in the first frame received last time.

Further, the receive end device determines, based on the second field, the frequency domain resource that is in the frequency domain resource of the at least one narrowband channel and that can be used to transmit the NB signal.

If the second field includes the at least one bit corresponding to the at least one narrowband channel, the receive end device may determine, based on the second field, whether a frequency domain of each of the at least one narrowband channel can be used to transmit the NB signal. That is, if a value of a second bit in the at least one bit is a first value, the receive end device determines that a frequency domain resource of a narrowband channel corresponding to the second bit can be used to transmit the NB signal; or if a value of a second bit in the at least one bit is a first value, the receive end device determines that a frequency domain resource of a narrowband channel corresponding to the second bit can be used to transmit the NB signal.

As shown in (a) in FIG. 11, it is assumed that the receive end device determines, based on the second field, that frequency domain resources of the channel a3 and the channel a4 can be used to transmit the NB signal, available frequency domain resources finally determined by the receive end device include 5730 MHz to 5737.5 MHz, 5772.5 MHz to 5777.5 MHz, and 5792.5 MHz to 5780 MHz.

As shown in (b) in FIG. 11, it is assumed that the receive end device determines, based on the second field, that frequency domain resources of the channel a3 and the channel a4 can be used to transmit the NB signal, the available frequency domain resource finally determined by the receive end device is represented as $[5735 + (t-1)20 - 10 \times 1/2, 5735 + (t-1)20 + 10 \times 1/2]$, where t is a positive integer, and $1 \leq t \leq 6$.

It should be noted that if the first frame does not include the second field, the receive end device may consider by default that the frequency domain resource of the at least one narrowband channel can be used to transmit the NB signal, or consider by default that the frequency domain resource of the at least one narrowband channel cannot be used to transmit the NB signal. Alternatively, the receive end device determines, based on the second field included in the first frame received last time, whether the frequency domain resource of the at least one narrowband channel can be used to transmit the NB signal.

After determining the available frequency domain resource, the receive end device determines the at least one available narrowband channel based on the available frequency domain resource. As described above, the at least one available narrowband channel belongs to the plurality of candidate narrowband channels. That the receive end device determines the at least one available narrowband channel based on the available frequency domain resource is equivalent to that the receive end device determines the at least one available narrowband channel from the plurality of candidate narrowband channels based on the available frequency domain resource. Specifically, if a frequency of a candidate narrowband channel is within an available frequency domain resource range, the receive end device determines that the candidate narrowband channel is the available narrowband channel. It can be learned that the receive end device can determine the at least one available narrowband channel based on the available frequency domain resource only after determining the frequency of each of the plurality of candidate narrowband channels.

For example, if the first frame further includes a third field, the receive end device may determine the offset value between the frequency of the candidate narrowband channel and the frequency of the reference narrowband channel based on the third field. Further, the receive end device can determine frequencies of the plurality of candidate narrowband channels when determining the bandwidth of the candidate narrowband channel. It is assumed that a spectrum of the narrowband system is a spectrum UNII-3, and the third field indicates that an offset value between a frequency of the first candidate narrowband channel in the plurality of candidate narrowband channels and a frequency of the first reference narrowband channel in the plurality of reference narrowband channels is -1.25, the receive end device determines, based on the predefined channel division manner, that the frequency of the first reference narrowband signal is 5727.5 MHz, and the receive end device determines that the frequency of the first candidate narrowband channel is 5726.25 MHz. If the bandwidth of the candidate narrowband channel is 2.5 MHz, a frequency $f_n$ of an $n^{th}$ channel in the plurality of candidate narrowband channels determined by the receive end device may be represented as $f_n = 5726.25\text{MHz} + (n-1) \times 2.5\text{MHz}$, where $1 \leq n \leq 50$. In other words, the plurality of candidate narrowband channels are the channel a1 to the channel a50 shown in FIG. 6.

For example, if the first frame further includes a fourth field, the receive end device may determine the bandwidth of the candidate narrowband channel based on the fourth field, and then the receive end device may determine the frequencies of the plurality of candidate narrowband channels based on the bandwidth of the candidate narrowband channel.

If the first frame does not include the third field, the receive end device may consider by default that the offset value between the frequency of the candidate narrowband channel and the frequency of the reference narrowband channel is 0. If the first frame does not include the fourth field, the receive end device may consider by default that the bandwidth of the candidate narrowband channel is the same as the bandwidth of the reference narrowband channel. If the first frame does not include the third field and the fourth field, the receive end device may determine that the plurality of candidate narrowband channels are the same as the plurality of reference narrowband channels.

After determining the frequencies of the plurality of candidate narrowband channels, the receive end device may determine the at least one available narrowband channel based on the frequencies of the plurality of candidate narrowband channels and the available frequency domain resource.

It is assumed that available frequency domain resources include 5730 MHz to 5737.5 MHz, 5772.5 MHz to 5777.5 MHz, and 5792.5 MHz. to 5780 MHz, and a frequency $f_n$ of an $n^{th}$ channel in the plurality of candidate narrowband channels may be represented as $f_n = 5726.25\text{MHz} + (n-1)\times2.5\text{MHz}$. In this case, the at least one available narrowband channel determined by the receive end device includes: the channel a3 to the channel a5, the channel a12 and the channel a13, and the channel a20 to the channel a50 shown in FIG. 6.

It is assumed that the available frequency domain resource is represented as $[5735 + (t-1)20 - 10\times1/2, 5735 + (t-1)20 + 10\times1/2]$, t is a positive integer, $1\leq t\leq6$, and the frequency $f_n$ of the $n^{th}$ channel in the plurality of candidate narrowband channels may be represented as $f_n = 5726.25\text{MHz} + (n-1)\times2.5\text{MHz}$. In this case, the receive end device may determine the at least one available narrowband channel according to the following algorithm:

$$\text{For all } 1\leq n\leq 6,\ 1\leq t\leq 6.$$
$$\text{If }\ f_n \in [5735 + (t-1)20 - 10\times 1/2, 5735 + (t-1)20 + 10\times 1/2],$$
$$\text{AllowList[n]=1.}$$

AllowList[n]=1 indicates that the $n^{th}$ channel in the plurality of candidate narrowband channels is the available narrowband channel. According to the foregoing algorithm, the at least one available narrowband channel determined by the receive end device includes: the channel a3 to the channel a6, the channel a19 to the channel a22, the channel a27 to the channel a30, the channel a35 to the channel a38, and the channel a43 to the channel a46 shown in FIG. 6.

Optionally, if the first frame further includes a sixth field, the receive end device may further determine, based on the sixth field, duration and/or a start moment in which and/or at which the at least one available narrowband channel can be used to transmit the NB signal.

For example, if the sixth field includes a fourth subfield, a unit of duration indicated by the fourth subfield is measurement duration, and seven bits included in the fourth subfield are "0000011", the receive end device may determine, based on the fourth subfield, that there is an interval of four pieces of measurement duration between the start moment of the time period in which the available narrowband channel can be used to transmit the NB signal and a moment at which the first frame is received.

For example, if the sixth field includes a fifth subfield, a unit of duration indicated by the fifth subfield is measurement duration, and three bits included in the fifth subfield are "011", the receive end device may determine, based on the fifth subfield, that the duration of the time period in which the available narrowband channel can be used to transmit the NB signal includes four pieces of measurement duration.

After determining the at least one available narrowband channel, the receive end device can transmit the NB signal through the at least one available narrowband channel.

In this embodiment of this application, the transmit end device may send the first frame to the receive end device, and then the receive end device may determine, based on the first frame, the at least one available narrowband channel that can be used to transmit the NB signal. When the spectrum of the narrowband system overlaps a spectrum of a Wi-Fi system, according to the method provided in this embodiment of this application, the transmit end device can indicate, to the receive end device by using the first frame, a frequency domain resource that is not occupied by a Wi-Fi device, that is, the frequency domain resource of the at least one available narrowband channel determined by the receive end device based on the first frame is not occupied by the Wi-Fi device. In this way, the NB signal sent by the receive end device can be prevented from being interfered by the Wi-Fi device.

In addition, in this embodiment of this application, the first field indicates whether the frequency domain resource of the at least one Wi-Fi channel can be used to transmit the NB signal. A bandwidth of the Wi-Fi channel is large, and for a segment of spectrum resources, a quantity of bits required for indicating the Wi-Fi channel is less than a quantity of bits required for indicating the narrowband channel. Therefore, the method provided in this embodiment of this application does not cause high bit overheads.

In this embodiment of this application, the second field further indicates whether the frequency domain resource of the at least one narrowband channel can be used to transmit the NB signal, and each of the at least one narrowband channel includes the frequency domain resource that cannot be used to transmit the Wi-Fi signal. In this way, when a spectrum resource of the narrowband system includes the frequency domain resource that cannot be used to transmit the Wi-Fi signal, the spectrum resource of the narrowband system can be comprehensively indicated.

In addition, the first frame may further include at least one scaling factor field. If a device has both a capability of transmitting an NB signal and a capability of transmitting a Wi-Fi signal, a scaling factor whose value is greater than 1 may be indicated by using the at least one scaling factor field. In this way, a frequency domain resource for transmitting the NB signal is not adjacent to a frequency domain resource for transmitting the Wi-Fi signal, thereby preventing in-band interference.

In addition, the first frame may further include a fourth subfield, and a unit of duration indicated by the fourth subfield is a measurement slot or measurement duration. Therefore, the fourth subfield includes a maximum of 10 bits or seven bits, and does not cause excessively high bit overheads.

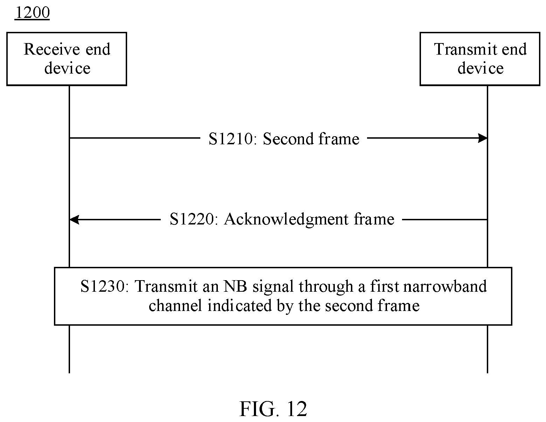

FIG. 12 is a schematic flowchart of a communication method 1200 according to another embodiment of this application. The method may include the following steps.

S1210: A receive end device sends a second frame to a transmit end device.

Correspondingly, the transmit end device receives the second frame from the receive end device.

The second frame indicates a first narrowband channel that can be used to transmit an NB signal. For a structure of the second frame, refer to the description of the first frame in the foregoing method 500. The first narrowband channel may also be referred to as a recommended narrowband channel.

It should be noted that the second frame does not include a sixth field.

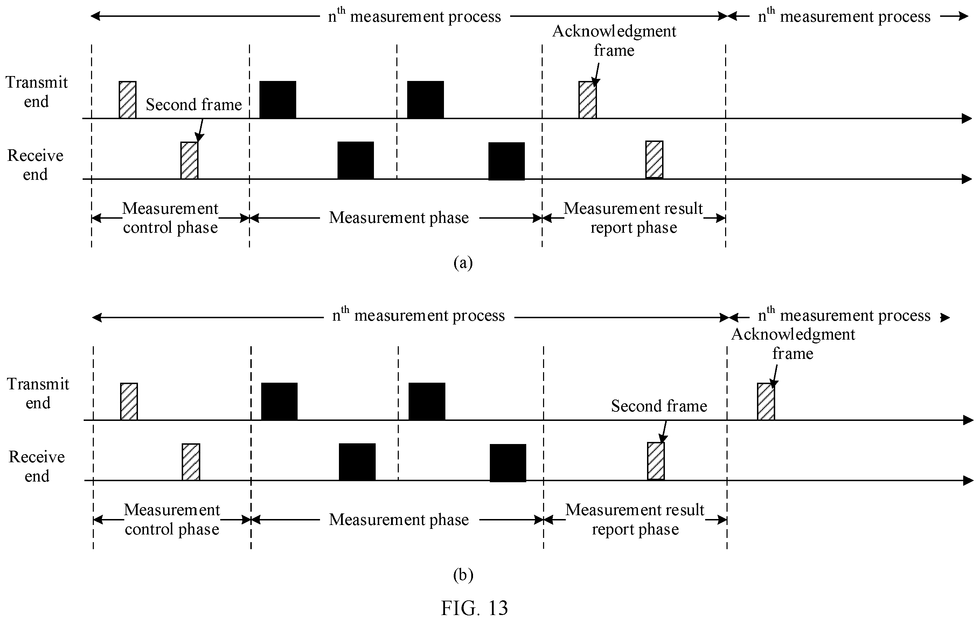

For example, as shown in (a) in FIG. 13, in a measurement control phase in an $n^{th}$ measurement process, the receive end device sends the second frame to the transmit end device.

For example, as shown in (b) in FIG. 13, in a measurement result report phase in an $n^{th}$ measurement process, the receive end device sends the second frame to the transmit end device.

S1220: The transmit end device sends an acknowledgment frame to the receive end device.

Correspondingly, the receive end device receives the acknowledgment frame from the transmit end device.

The acknowledgment frame is an acknowledgment frame for the second frame.

After receiving the acknowledgment frame, the receive end device may determine, based on the acknowledgment frame, that the first narrowband channel indicated by the second frame can be used to transmit the NB signal.

For example, as shown in (a) in FIG. 13, if the transmit end device receives the second frame in a measurement control phase in an $n^{th}$ measurement process, the transmit end device may send the acknowledgment frame to the receive end device in a measurement result report phase in the $n^{th}$ measurement process.

For example, as shown in (b) in FIG. 13, if the transmit end device receives the second frame in a measurement result report phase in an $n^{th}$ measurement process, the transmit end device may send the acknowledgment frame to the receive end device in a measurement control phase in an $(n+)^{th}$ measurement process.

S1230: The NB signal is transmitted between the transmit end device and the receive end device through the first narrowband channel.

For example, if the transmit end device sends the acknowledgment frame to the receive end device in an $n^{th}$ measurement process, the NB signal is transmitted between the transmit end device and the receive end device through the first narrowband channel in an $(n+1)^{th}$ measurement process.

If the transmit end device sends the acknowledgment frame to the receive end device in an $(n+1)^{th}$ measurement process, the NB signal is transmitted between the transmit end device and the receive end device through the first narrowband channel in an $(n+2)^{th}$ measurement process.

In this embodiment of this application, if the receive end device can run a Wi-Fi service whose spectrum is the same as a spectrum of the narrowband system, the receive end device may generate the second frame based on the service run by the receive end device, and indicate, to the transmit end device by using the second frame, the first narrowband channel that can be used to transmit the NB signal. Further, if the transmit end device determines that the first narrowband channel can be used to transmit the NB signal, the transmit end device may reply with the acknowledgment frame to the receive end device, so that the receive end device determines, based on the acknowledgment frame, that the first narrowband channel can be used to transmit the NB signal. Further, the NB signal can be transmitted between the transmit end device and the receive end device through the first narrowband channel in a next measurement process.

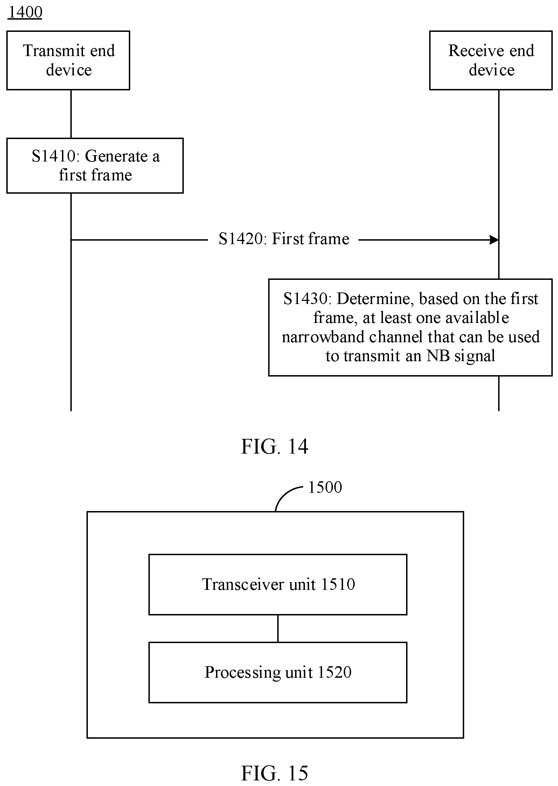

FIG. 14 is a schematic flowchart of a communication method 1400 according to an embodiment of this application. The method may include the following steps.

S1410: A transmit end device generates a first frame.

The first frame is used to determine at least one available narrowband channel that can be used to transmit a narrowband NB signal, the first frame includes a first field, the first field indicates whether a frequency domain resource corresponding to each of at least one first channel can be used to transmit the NB signal, and a bandwidth of the first channel is greater than a bandwidth of the available narrowband channel.

For example, the bandwidth of the first channel is twice the bandwidth of the narrowband channel, or the bandwidth of the first channel is three times the bandwidth of the narrowband channel. This is not limited in this embodiment of this application.

For example, the first field includes at least one bit corresponding to the at least one first channel; and if a value of a first bit in the at least one bit corresponding to the at least one first channel is a first value, a frequency domain resource of a first channel corresponding to the first bit can be used to transmit the NB signal; or if a value of a first bit in the at least one bit corresponding to the at least one first channel is a second value, a frequency domain resource of a first channel corresponding to the first bit cannot be used to transmit the NB signal. The first value is 0, and the second value is 1; or the first value is 1, and the second value is 0.

Optionally, the first frame further includes at least one scaling factor field, and the at least one scaling factor field corresponds to at least one Wi-Fi channel. A first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

Optionally, the first frame further includes a third field and/or a fourth field. The third field indicates an offset value between a frequency of a candidate narrowband channel and a frequency of a reference narrowband channel. The fourth field indicates a bandwidth of the candidate narrowband channel.

Optionally, the first frame further includes a fifth field, and the fifth field indicates the bandwidth of the first channel.

Optionally, the first frame further includes a sixth field, and the sixth field is used to determine duration of a time period in which the available narrowband channel can be used to transmit the NB signal and/or a start moment of the time period.

Optionally, the first frame further includes a seventh field, and the seventh field indicates whether the first frame includes the following fields: the first field, the at least one scaling factor field, the third field, the fourth field, the fifth field, or the sixth field.

S1420: The transmit end device sends the first frame to the receive end device.

Correspondingly, the receive end device receives the first frame from the transmit end device.

S1430: The receive end device determines the at least one available narrowband channel based on the first frame.

For more description of the method 1400, refer to the description in the foregoing method 500. For brevity, details are not described in this embodiment of this application again.

In this embodiment of this application, whether the frequency domain resource of the first channel can be used to transmit the NB signal is indicated, so that the at least one available narrowband channel can be indicated to the receive end device. In addition, the bandwidth of the first channel is greater than the bandwidth of the available narrowband channel, and for a segment of spectrum resources, a quantity of bits required for indicating the first channel is less than a quantity of bits required for indicating the narrowband channel. Therefore, the method provided in this embodiment of this application does not cause high bit overheads.

FIG. 15 is a block diagram of an apparatus according to an embodiment of this application. As shown in FIG. 15, the apparatus 1500 may include a transceiver unit 1510 and a processing unit 1520. The transceiver unit 1510 may communicate with the outside, and the processing unit 1520 is configured to perform data processing. The transceiver unit 1510 may also be referred to as a communication interface or a communication unit.

Optionally, the apparatus 1500 may further include a storage unit. The storage unit may be configured to store instructions and/or data. The processing unit 1520 may read the instructions and/or the data in the storage unit, so that the apparatus implements the foregoing method embodiments.

In a first design, the apparatus 1500 may be the transmit end device in the foregoing embodiments, or may be a component (for example, a chip) of the transmit end device. The apparatus 1500 may implement the steps or the processes performed by the transmit end device in the foregoing method embodiments. The transceiver unit 1510 may be configured to perform a sending/receiving-related operation performed by the transmit end device in the foregoing method embodiments. The processing unit 1520 may be configured to perform a processing-related operation performed by the transmit end device in the foregoing method embodiments.

In a possible implementation, the processing unit 1520 is configured to generate a first frame, where the first frame is used to determine at least one available narrowband channel that can be used to transmit an NB signal, the first frame includes at least one of the following fields: a first field, a second field, or at least one scaling factor field, and the first field indicates whether a frequency domain resource of each of at least one Wi-Fi channel can be used to transmit the NB signal; the second field indicates whether a frequency domain resource of each of at least one narrowband channel can be used to transmit the NB signal, and each of the at least one narrowband channel includes a frequency domain resource that cannot be used to transmit a Wi-Fi signal; and the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal; and the transceiver unit 1510 is configured to send the first frame.

In a possible implementation, the processing unit 1520 is configured to generate a first frame, where the first frame is used to determine at least one available narrowband channel that can be used to transmit an NB signal, the first frame includes a first field, the first field indicates whether a frequency domain resource corresponding to each of at least one first channel can be used to transmit the NB channel, and a bandwidth of the first channel is greater than a bandwidth of the available narrowband channel; and the transceiver unit 1510 is configured to send the first frame.

In a second design, the apparatus 1500 may be the receive end device in the foregoing embodiments, or may be a component (for example, a chip) of the receive end device. The apparatus 1500 may implement the steps or the processes performed by the receive end device in the foregoing method embodiments. The transceiver unit 1510 may be configured to perform a sending/receiving-related operation performed by the receive end device in the foregoing method embodiments. The processing unit 1520 may be configured to perform a processing-related operation performed by the receive end device in the foregoing method embodiments.

In a possible implementation, the transceiver unit 1510 is configured to receive a first frame, where the first frame includes at least one of the following fields: a first field, a second field, or at least one scaling factor field, and the first field indicates whether a frequency domain resource of each of at least one Wi-Fi channel can be used to transmit an NB signal; the second field indicates whether a frequency domain resource of each of at least one narrowband channel can be used to transmit the NB signal, and each of the at least one narrowband channel includes a frequency domain resource that cannot be used to transmit a Wi-Fi signal; and the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal; and the processing unit 1520 is configured to determine, based on the first frame, at least one available narrowband channel that can be used to transmit the NB signal.

In a possible implementation, the transceiver unit 1510 is configured to receive a first frame, where the first frame includes a first field, the first field indicates whether a frequency domain resource of each of at least one first channel can be used to transmit an NB channel, and a bandwidth of the first channel is greater than a bandwidth of an available narrowband channel; and the processing unit 1520 is configured to determine, based on the first frame, at least one available narrowband channel that can be used to transmit the NB signal.

In a possible implementation, the transceiver unit 1510 is configured to send a second frame in a measurement control phase of an $n^{th}$ measurement process, where the second frame is used to determine at least one first narrowband channel for transmitting an NB signal, and n is a positive integer; receive an acknowledgment frame of the second frame in a measurement result report phase of the $n^{th}$ measurement process; and send the NB signal through the first narrowband channel in an $(n+1)^{th}$ measurement process.

It should be understood that a specific process in which the units perform the foregoing corresponding steps is described in detail in the foregoing method embodiments. For brevity, details are not described herein.

It should be understood that the apparatus 1500 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1500 may be specifically the transmit end device in the foregoing embodiments, and may be configured to perform the processes and/or the steps corresponding to the transmit end device in the foregoing method embodiments; or the apparatus 1500 may be specifically the receive end device in the foregoing embodiments, and may be configured to perform the processes and/or the steps corresponding to the receive end device in the foregoing method embodiments. To avoid repetition, details are not described herein again. The transceiver unit 1510 may alternatively be a transceiver circuit (for example, may include a receiver circuit and a transmitter circuit), and the processing unit 1520 may be a processing circuit. The apparatus in FIG. 15 may be a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The apparatus 1500 in the foregoing solutions has functions of implementing corresponding steps performed by the transmit end device or the receive end device in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform sending and receiving operations and a related processing operation in the method embodiments.

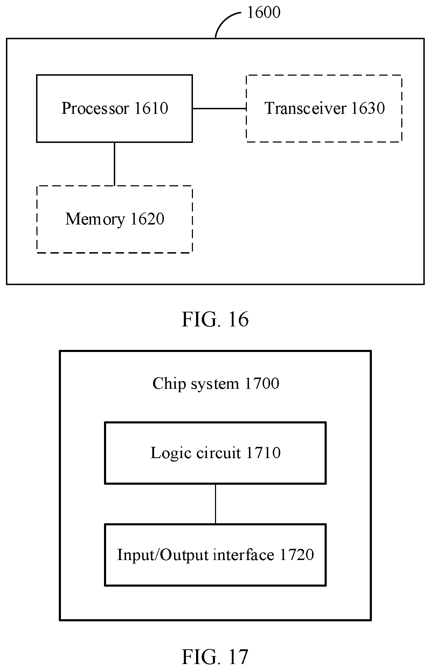

FIG. 16 is a diagram of an apparatus 1600 according to an embodiment of this application. The apparatus 1600 includes a processor 1610. The processor 1610 is configured to execute a computer program or instructions stored in a memory 1620, or read data or the instructions stored in the memory 1620, to perform the methods in the foregoing method embodiments. Optionally, there are one or more processors 1610.

Optionally, as shown in FIG. 16, the apparatus 1600 further includes the memory 1620. The memory 1620 is configured to store the computer program or the instructions and/or the data. The memory 1620 and the processor 1610 may be integrated, or may be disposed separately. Optionally, there are one or more memories 1620.

Optionally, as shown in FIG. 16, the apparatus 1600 may further include a transceiver 1630, and the transceiver 1630 is configured to receive and/or send a signal. For example, the processor 1610 is configured to control the transceiver 1630 to receive and/or send the signal.

In a solution, the apparatus 1600 is configured to implement the operations performed by the transmit end device in the foregoing method embodiments.

For example, the processor 1610 is configured to execute the computer program or instructions stored in the memory 1620, to implement related operations of the transmit end device in the foregoing method embodiments, for example, the method performed by the transmit end device in the embodiment shown in FIG. 5, FIG. 12, or FIG. 14.

In another solution, the apparatus 1600 is configured to implement the method performed by the receive end device in the foregoing method embodiments.

For example, the processor 1610 is configured to execute the computer program or instructions stored in the memory 1620, to implement related operations of the receive end device in the foregoing method embodiments, for example, the method performed by the receive end device in the embodiment shown in FIG. 5, FIG. 12, or FIG. 14.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 17 is a diagram of a chip system 1700 according to an embodiment of this application. The chip system 1700 (or may alternatively be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 3000, or inputs to-be-processed data or signaling into the chip system 1700 for processing.

Specifically, for example, if the chip system 1700 is installed in a transmit end device, the logic circuit 1710 is coupled to the input/output interface 1720, the logic circuit 1710 may send a first frame through the input/output interface 1720, and the first frame may be generated by the logic circuit 1710. For another example, if the chip system 1700 is installed in a receive end device, the logic circuit 1710 is coupled to the input/output interface 1720, the logic circuit 1710 may receive a first frame through the input/output interface 1720, and the logic circuit 1720 determines at least one available narrowband channel based on the first frame.

In a solution, the chip system 1700 is configured to implement the operations performed by the transmit end device in the foregoing method embodiments.

For example, the logic circuit 1710 is configured to implement a processing-related operation performed by the transmit end device in the foregoing method embodiments, for example, a processing-related operation performed by the transmit end device in the embodiment shown in FIG. 5, FIG. 12, or FIG. 14; and the input/output interface 1720 is configured to implement a sending-related operation and/or a receiving-related operation performed by the transmit end device in the foregoing method embodiments, for example, a processing-related operation performed by the transmit end device in the embodiment shown in FIG. 5, FIG. 12, or FIG. 14.

In another solution, the chip system 1700 is configured to implement the operations performed by the receive end device in the foregoing method embodiments.

For example, the logic circuit 1710 is configured to implement a processing-related operation performed by the receive end device in the foregoing method embodiments, for example, a processing-related operation performed by the receive end device in the embodiment shown in FIG. 5, FIG. 12, or FIG. 14; and the input/output interface 1720 is configured to implement a sending-related operation and/or a receiving-related operation performed by the receive end device in the foregoing method embodiments, for example, a processing-related operation performed by the receive end device in the embodiment shown in FIG. 5, FIG. 12, or FIG. 14.

An embodiment of this application further provides a computer-readable storage medium. The computer-readable storage medium stores computer instructions for implementing the methods performed by a device in the foregoing method embodiments.

For example, when the computer program is executed by a computer, the computer is enabled to implement the method performed by the transmit end device in the foregoing method embodiments.

For another example, when the computer program is executed by a computer, the computer is enabled to implement the method performed by the receive end device in the foregoing method embodiments.

An embodiment of this application further provides a computer program product, including instructions. When the instructions are executed by a computer, a method performed by a device (for example, the transmit end device, or for another example, the receive end device) in the foregoing method embodiments is implemented.

An embodiment of this application further provides a communication system, including the foregoing transmit end device and receive end device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

generating a first frame, wherein the first frame is used to determine at least one available narrowband channel that can be used to transmit a narrowband NB signal, and the first frame comprises at least one of the following fields: a first field, a second field, or at least one scaling factor field; and
sending the first frame, wherein
the first field indicates whether a frequency domain resource of each of at least one wireless fidelity Wi-Fi channel can be used to transmit the NB signal;
the second field indicates whether a frequency domain resource of each of at least one narrowband channel can be used to transmit the NB signal, and each of the at least one narrowband channel comprises a frequency domain resource that cannot be used to transmit a Wi-Fi signal; and
the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

2. The method according to claim 1, wherein the first frame comprises the first field, and the first field comprises at least one bit corresponding to the at least one Wi-Fi channel; and

if a value of a first bit in the at least one bit corresponding to the at least one Wi-Fi channel is a first value, a frequency domain resource of a Wi-Fi channel corresponding to the first bit can be used to transmit the NB signal; or
if a value of a first bit in the at least one bit corresponding to the at least one Wi-Fi channel is a second value, a frequency domain resource of a Wi-Fi channel corresponding to the first bit cannot be used to transmit the NB signal.

3. The method according to claim 1, wherein the first frame comprises the first field; and if the first field comprises a bit corresponding to a first Wi-Fi channel in the at least one Wi-Fi channel, and the first field comprises a bit corresponding to a second Wi-Fi channel in the at least one Wi-Fi channel, a first frequency domain resource corresponding to the first Wi-Fi channel, a second frequency domain resource corresponding to the second Wi-Fi channel, and a frequency domain resource between the first frequency domain resource and the second frequency domain resource cannot be used to transmit the NB signal; or
a first frequency domain resource corresponding to the first Wi-Fi channel, a second frequency domain resource corresponding to the second Wi-Fi channel, and a frequency domain resource between the first frequency domain resource and the second frequency domain resource can be used to transmit the NB signal.

4. The method according to any one of claims 1 to 3, wherein the first frame comprises the second field, and the second field comprises at least one bit corresponding to the at least one narrowband channel; and

if a value of a second bit in the at least one bit corresponding to the at least one narrowband channel is a first value, a frequency domain field of a narrowband channel corresponding to the second bit can be used to transmit the NB signal; or
if a value of a second bit in the at least one bit corresponding to the at least one narrowband channel is a second value, a frequency domain resource of a narrowband channel corresponding to the second bit cannot be used to transmit the NB signal.

5. The method according to any one of claims 1 to 4, wherein the first frame comprises a third field, the third field indicates an offset value between a frequency of the available narrowband channel and a frequency of a reference narrowband channel, and the frequency of the reference narrowband channel is a preset value.

6. The method according to any one of claims 1 to 5, wherein the first frame further comprises a fourth field, and the fourth field is used to determine a bandwidth of the available narrowband channel.

7. The method according to any one of claims 1 to 6, wherein the first frame comprises the first field, the first frame further comprises a fifth field, and the fifth field indicates a bandwidth of the Wi-Fi channel.

8. The method according to any one of claims 1 to 7, wherein the first frame further comprises a sixth field, and the sixth field is used to determine duration of a time period in which the available narrowband channel can be used to transmit the NB signal and/or a start moment of the time period.

9. The method according to claim 8, wherein the first frame further comprises a seventh field, and the seventh field indicates whether the first frame comprises at least one of the following fields: the first field, the second field, the at least one scaling factor field, the third field, the fourth field, the fifth field, or the sixth field.

10. The method according to any one of claims 1 to 9, wherein before the sending the first frame, the method further comprises:
receiving a second frame, wherein the second frame is used to determine a first narrowband channel for transmitting the NB signal.

11. A communication method, comprising:

receiving a first frame, wherein the first frame comprises at least one of the following fields: a first field, a second field, or at least one scaling factor field; and
determining, based on the first frame, at least one available narrowband channel that can be used to transmit a narrowband NB signal, wherein
the first field indicates whether a frequency domain resource of each of at least one wireless fidelity Wi-Fi channel can be used to transmit the NB signal;
the second field indicates whether a frequency domain resource of each of at least one narrowband channel can be used to transmit the NB signal, and each of the at least one narrowband channel comprises a frequency domain resource that cannot be used to transmit a Wi-Fi signal; and
the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

12. The method according to claim 11, wherein the first frame comprises the first field, the first field comprises at least one bit corresponding to the at least one Wi-Fi channel; and the determining, based on the first frame, at least one available narrowband channel that can be used to transmit an NB signal comprises:

if a value of a first bit in the at least one bit corresponding to the at least one Wi-Fi channel is a first value, determining that a frequency domain resource of a Wi-Fi channel corresponding to the first bit can be used to transmit the NB signal, wherein a frequency domain resource of the at least one available narrowband channel comprises the frequency domain resource of the Wi-Fi channel corresponding to the first bit; or
if a value of a first bit in the at least one bit corresponding to the at least one Wi-Fi channel is a second value, determining that a frequency domain resource of a Wi-Fi channel corresponding to the first bit cannot be used to transmit the NB signal.

13. The method according to claim 11, wherein the first frame comprises the first field; and if the first field comprises a bit corresponding to a first Wi-Fi channel in the at least one Wi-Fi channel, and the first field comprises a bit corresponding to a second Wi-Fi channel in the at least one Wi-Fi channel, determining that a first frequency domain resource corresponding to the first Wi-Fi channel, a second frequency domain resource corresponding to the second Wi-Fi channel, and a frequency domain resource between the first frequency domain resource and the second frequency domain resource cannot be used to transmit the NB signal; or
determining that a first frequency domain resource corresponding to the first Wi-Fi channel, a second frequency domain resource corresponding to the second Wi-Fi channel, and a frequency domain resource between the first frequency domain resource and the second frequency domain resource can be used to transmit the NB signal.

14. The method according to any one of claims 11 to 13, wherein the first frame comprises the second field, the second field comprises at least one bit corresponding to the at least one narrowband channel, and the determining, based on the first frame, at least one available narrowband channel that can be used to transmit an NB signal comprises:

if a value of a second bit in the at least one bit corresponding to the at least one narrowband channel is a first value, determining that a frequency domain resource of a narrowband channel corresponding to the second bit can be used to transmit the NB signal, wherein the frequency domain resource of the at least one available narrowband channel comprises the frequency domain resource of the narrowband channel corresponding to the second bit; or if a value of a second bit in the at least one bit corresponding to the at least one narrowband channel is a second value, a narrowband channel corresponding to the second bit cannot be used to transmit the NB signal.

15. The method according to any one of claims 11 to 14, wherein the first frame comprises a third field, the third field indicates an offset value between a frequency of the available narrowband channel and a frequency of a reference narrowband channel, and the frequency of the reference narrowband channel is a preset value; and
the determining, based on the first frame, at least one available narrowband channel that can be used to transmit an NB signal comprises:

determining, based on the at least one of the following fields comprised in the first frame: the first field, the second field, or the at least one scaling factor field, an available frequency domain resource that can be used to transmit the NB signal; and
determining the at least one available narrowband channel based on the available frequency domain resource and the third field.

16. The method according to any one of claims 11 to 15, wherein the first frame further comprises a fourth field, and the fourth field is used to determine a bandwidth of the available narrowband channel; and
the determining, based on the first frame, at least one available narrowband channel that can be used to transmit an NB signal comprises:

determining, based on the at least one of the following fields comprised in the first frame: the first field, the second field, or the at least one scaling factor field, an available frequency domain resource that can be used to transmit the NB signal; and
determining the at least one available narrowband channel based on the available frequency domain resource and the fourth field.

17. The method according to any one of claims 11 to 16, wherein the first frame comprises the first field, the first frame further comprises a fifth field, and the fifth field indicates a bandwidth of the Wi-Fi channel.

18. The method according to any one of claims 11 to 17, wherein the first frame further comprises a sixth field, and the sixth field is used to determine duration of a time period in which the available narrowband channel can be used to transmit the NB signal and/or a start moment of the time period; and the method further comprises:
determining, based on the first frame, the duration of the time period in which the available narrowband channel can be used to transmit the NB signal and/or the start moment of the time period.

19. The method according to claim 18, wherein the first frame further comprises a seventh field, and the seventh field indicates whether the first frame comprises at least one of the following fields: the first field, the second field, the at least one scaling factor field, the third field, the fourth field, the fifth field, or the sixth field.

20. The method according to any one of claims 11 to 19, wherein the method further comprises:
sending a second frame, wherein the second frame is used to determine a first narrowband channel for transmitting the NB signal.

21. An apparatus, comprising a transceiver unit and a processing unit, wherein

the processing unit is configured to generate a first frame, wherein the first frame is used to determine at least one available narrowband channel that can be used to transmit a narrowband NB signal, and the first frame comprises at least one of the following fields: a first field, a second field, or at least one scaling factor field; and
the transceiver unit is configured to send the first frame, wherein
the first field indicates whether a frequency domain resource of each of at least one wireless fidelity Wi-Fi channel can be used to transmit the NB signal;
the second field indicates whether a frequency domain resource of each of at least one narrowband channel can be used to transmit the NB signal, and each of the at least one narrowband channel comprises a frequency domain resource that cannot be used to transmit a Wi-Fi signal; and
the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

22. An apparatus, comprising a transceiver unit and a processing unit, wherein

the transceiver unit is configured to receive a first frame, wherein the first frame comprises at least one of the following fields: a first field, a second field, or at least one scaling factor field; and

the processing unit is configured to determine, based on the first frame, at least one available narrowband channel that can be used to transmit a narrowband NB signal, wherein

the first field indicates whether a frequency domain resource of each of at least one wireless fidelity Wi-Fi channel can be used to transmit the NB signal;

the second field indicates whether a frequency domain resource of each of at least one narrowband channel can be used to transmit the NB signal, and each of the at least one narrowband channel comprises a frequency domain resource that cannot be used to transmit a Wi-Fi signal; and

the at least one scaling factor field corresponds to the at least one Wi-Fi channel, a first scaling factor field in the at least one scaling factor field indicates a first scaling factor, and the first scaling factor and a frequency domain resource of a Wi-Fi channel corresponding to the first scaling factor field are used to determine a frequency domain resource that can be used to transmit the NB signal.

23. An apparatus, comprising:
a processor, configured to execute computer instructions stored in a memory, to enable the apparatus to perform the method according to any one of claims 1 to 10, or to enable the apparatus to perform the method according to any one of claims 11 to 20.

24. A computer-readable storage medium, configured to store a computer program, wherein the computer program comprises instructions for implementing the method according to any one of claims 1 to 10, or comprises instructions for implementing the method according to any one of claims 11 to 20.

25. A computer program product, wherein the computer program product comprises a computer program or instructions, and when the computer program or the instructions are run on a computer, the computer is enabled to perform the method according to any one of claims 1 to 10 or claims 11 to 20.

101

102

PAN coordinator

(A)

● FFD

○ RFD

◄──► Communication stream

PAN coordinator

(B)

FIG. 1

UWB fragment
signal #1

UWB fragment
signal #2

UWB fragment
signal #3

|◄── 1 ms ──►|◄── 1 ms ──►|◄── 1 ms ──►|

...

Time

FIG. 2

| Device 1/Device 1 | Device 2/Device 2 |
|---|---|

UWB module | Narrowband communication module

Narrowband communication module | UWB module

Data transmission

Positioning and/or ranging

FIG. 3

FIG. 4

500

| Transmit end device |

| Receive end device |

S510: Generate a first frame

S520: First frame →

S530: Determine, based on the first frame, at least one available narrowband channel that can be used to transmit an NB signal

FIG. 5

← UNII-3 (5725 MHz to 5850 MHz) →

| a1 | a2 | a3 | a4 | a5 | a6 | ... | a49 | a50 |

5726.5

| b1 | b2 | b3 | b4 | b5 | b6 | ... | b49 |

FIG. 6

← UNII-3 (5725 MHz to 5850 MHz) →

5725 5730 5735    5755    5775    5795    5815    5835 5850

| 144 | | 149 | 153 | 157 | 161 | 165 | 169 |

| 151 | 159 | 167 |

| 155 |

FIG. 7

EP 4 568 341 A1

UNII-3 (5725 MHz to 5850 MHz)

5725    5730    5735        5755        5775

| 144 | | 149 | 153 | ... |

| a1 | a2 | a2 | a4 | a5 | a6 | a7 | a8 | a9 | a10 | a11 | a12 | a13 | a14 | a15 | a16 | a17 | a18 | a19 | a20 | ... |

FIG. 8

UNII-3 (5725 MHz to 5850 MHz)

5725  5730  5735  5755  5775

144  149  153  …

b1 b2 b3 b4 b5 b6 b7 b8 b9 b10 b11 b12 b13 b14 b15 b16 b17 b18 b19  …

FIG. 9

| Non-Wi-Fi occupied channel | Scaling factor field | Wi-Fi channel |
|---|---|---|

(a)

| Non-Wi-Fi occupied channel | Scaling factor field | Wi-Fi channel | Scaling factor field | Wi-Fi channel | Scaling factor field | Wi-Fi channel |
|---|---|---|---|---|---|---|

(b)

| Non-Wi-Fi occupied channel | Shift | Scaling factor field | Wi-Fi channel |
|---|---|---|---|

(c)

| Non-Wi-Fi occupied channel | Scaling factor field | Bandwidth | Wi-Fi channel |
|---|---|---|---|

(d)

| Field present indication | Non-Wi-Fi occupied channel | Scaling factor field | Wi-Fi channel |
|---|---|---|---|

(e)

FIG. 10

EP 4 568 341 A1

EP 4 568 341 A1

UNII-3 (5725 MHz to 5850 MHz)

5725     5730     5735     5755     5775

| 144 | 149 | 153 | ... |

Cannot be used to transmit an NB signal

Cannot be used to transmit an NB signal

| a1 | a2 | a3 | a4 | a5 | a6 | a7 | a8 | a9 | a10 | a11 | a12 | a13 | a14 | a15 | a16 | a17 | a18 | a19 | a20 | ... |

(a)

UNII-3 (5725 MHz to 5850 MHz)

5725     5730     5735     5755     5775

| 144 | 149 | 153 | ... |

Can be used to transmit an NB signal

Can be used to transmit an NB signal

| a1 | a2 | a3 | a4 | a5 | a6 | a7 | a8 | a9 | a10 | a11 | a12 | a13 | a14 | a15 | a16 | a17 | a18 | a19 | a20 | ... |

(b)

FIG. 11

1200

```
┌──────────────┐                              ┌──────────────┐
│  Receive end │                              │ Transmit end │
│    device    │                              │    device    │
└──────────────┘                              └──────────────┘
       │                                             │
       │ ──────── S1210: Second frame ─────────────> │
       │                                             │
       │ <─────── S1220: Acknowledgment frame ────── │
       │                                             │
  ┌────┴─────────────────────────────────────────────┴────┐
  │ S1230: Transmit an NB signal through a first narrowband│
  │        channel indicated by the second frame           │
  └────┬─────────────────────────────────────────────┬────┘
       │                                             │
```

FIG. 12

FIG. 13

1400

Transmit end
device

Receive end
device

S1410: Generate a
first frame

S1420: First frame

S1430: Determine, based on the first
frame, at least one available
narrowband channel that can be used
to transmit an NB signal

FIG. 14

1500

Transceiver unit 1510

Processing unit 1520

FIG. 15

1600

```
Processor 1610 ──── Transceiver 1630

Memory 1620
```

FIG. 16

```
Chip system 1700

Logic circuit 1710

Input/Output interface 1720
```

FIG. 17

## INTERNATIONAL SEARCH REPORT

| International application No. |
| --- |
| **PCT/CN2023/104742** |

### A. CLASSIFICATION OF SUBJECT MATTER

H04W28/20(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 超宽带, 冲突, 干扰, 交叠, 可用, 宽带, 蓝牙, 无线保真, 碰撞, 频带, 频段, 频率, 频谱, 频域, 缩放, 信道, 窄带, 重叠, 字段, assisted, band, bluetooth, BT, frequency, millisecond, MMS, multi, narrow, narrowband, NB, NBA, ultra, UWB, WB, wide, wideband, WiFi, zigbee, Wi-Fi, overlap+, conflict+, colli+, interference, availab+, field, scal+

### C. DOCUMENTS CONSIDERED TO BE RELEVANT

| Category* | Citation of document, with indication, where appropriate, of the relevant passages | Relevant to claim No. |
| --- | --- | --- |
| Y | WO 2018113127 A1 (HUAWEI TECHNOLOGIES CO., LTD.) 28 June 2018 (2018-06-28) description, page 10, line 35 to page 17, line 38 | 1-25 |
| Y | CN 110300427 A (MEDIATEK INC.) 01 October 2019 (2019-10-01) description, paragraph 58 | 1-25 |
| Y | CN 106538017 A (QUALCOMM INC.) 22 March 2017 (2017-03-22) description, paragraphs 114 and 120 | 1-25 |
| A | CN 114449660 A (APPLE INC.) 06 May 2022 (2022-05-06) entire document | 1-25 |
| A | US 2006252418 A1 (QUINN Liam B. et al.) 09 November 2006 (2006-11-09) entire document | 1-25 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **26 August 2023** | **31 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104742**

| Patent document cited in search report | | | Publication date (day/month/year) | Patent family member(s) | | | Publication date (day/month/year) |
|---|---|---|---|---|---|---|---|
| WO | 2018113127 | A1 | 28 June 2018 | CN | 109716819 | A | 03 May 2019 |
| CN | 110300427 | A | 01 October 2019 | None | | | |
| CN | 106538017 | A | 22 March 2017 | AU | 2015290198 | A1 | 05 January 2017 |
| | | | | AU | 2021203676 | A1 | 01 July 2021 |
| | | | | EP | 3170358 | A1 | 24 May 2017 |
| | | | | US | 2016021661 | A1 | 21 January 2016 |
| | | | | KR | 20170031696 | A | 21 March 2017 |
| | | | | AU | 2019236739 | A1 | 17 October 2019 |
| | | | | JP | 2017528035 | A | 21 September 2017 |
| | | | | WO | 2016010684 | A1 | 21 January 2016 |
| | | | | BR | 112017000213 | A2 | 31 October 2017 |
| | | | | ES | 2812791 | T3 | 18 March 2021 |
| | | | | US | 2017288794 | A1 | 05 October 2017 |
| | | | | IN | 201647041314 | A | 05 May 2017 |
| | | | | ID | 201801705 | A | 23 February 2018 |
| CN | 114449660 | A | 06 May 2022 | US | 2022137177 | A1 | 05 May 2022 |
| | | | | EP | 4130791 | A1 | 08 February 2023 |
| | | | | EP | 4131807 | A1 | 08 February 2023 |
| | | | | KR | 20230020928 | A | 13 February 2023 |
| | | | | CN | 115706656 | A | 17 February 2023 |
| | | | | CN | 115706657 | A | 17 February 2023 |
| | | | | CN | 115706920 | A | 17 February 2023 |
| US | 2006252418 | A1 | 09 November 2006 | SG | 126914 | A1 | 29 November 2006 |
| | | | | TW | 200704007 | A | 16 January 2007 |
| | | | | CN | 1881828 | A | 20 December 2006 |
| | | | | CN | 102638799 | A | 15 August 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211080747